# EUROPÄISCHE PATENTSCHRIFT

(11) **EP 2 193 345 B1**
(45) Veröffentlichungstag und Bekanntmachung des Hinweises auf die Patenterteilung: **23.01.2019**
(21) Anmeldenummer: 08801976.5
(22) Anmeldetag: 10.09.2008
(51) Int. Cl.: G01F 23/292

(54) **OPTISCHES SENSORSYSTEM**
OPTICAL SENSOR SYSTEM
SYSTÈME DE DÉTECTEURS OPTIQUES

(30) Priorität: 10.09.2007 DE 102007043741
(43) Veröffentlichungstag der Anmeldung: 09.06.2010
(73) Patentinhaber: EPPENDORF AG, 22339 Hamburg (DE)
(72) Erfinder: GÖTZ, Reinhold, 22395 Hamburg (DE); HARNACK, Kurt, 22889 Tangstedt (DE); KNOFE, Helmut, 22844 Norderstedt (DE); KROOG, Jens-Peter, 22927 Grosshansdorf (DE); SCHEFFLER, Peter, 22399 Hamburg (DE)
(74) Vertreter: Hauck Patentanwaltspartnerschaft mbB
(86) Internationale Anmeldenummer: PCT/EP2008/007404
(87) Internationale Veröffentlichungsnummer: WO 2009/033645

(56) Entgegenhaltungen:
- EP-A- 1 288 635
- WO-A-92/08104
- WO-A-03/023370
- WO-A1-2006/063838
- DE-A1-102006 009 809
- DE-U1-202005 020 705
- JP-A- 1 110 222
- US-A- 4 339 664
- US-A- 4 524 282
- US-A1- 2005 156 607

## Beschreibung

Die Erfindung bezieht sich auf ein optisches Sensorsystem und ein Verfahren zur Bestimmung der Höhe eines Flüssigkeitsspiegels in einem Gefäß nach Anspruch 1 und Anspruch 15.

Ein optisches Sensorsystem der erfindungsgemäßen Art dient der Bestimmung der Höhe eines Flüssigkeitsspiegels in Gefäßen, z.B. Reaktionsgefäßen. Bei bekannten Vorrichtungen zur Behandlung von Flüssigkeiten werden die Abläufe entweder manuell oder zum Teil oder vollständig automatisch durchgeführt. So sind beispielsweise für das Dosieren manuelle Pipetten, PCunterstützte Dosiersysteme und vollautomatische Dosierstationen bekannt. Für das Dosieren, Transportieren, Untersuchen und Bearbeiten von Flüssigkeiten gibt es vollautomatische Behandlungsstationen (sogenannte "Workstations").

Sowohl beim manuellen als auch beim automatischen Pipettieren muss bei der Flüssigkeitsaufnahme die Pipettenspitze mit möglichst geringer Eintauchtiefe in die Flüssigkeit eingetaucht werden, weil der Dosierfehler mit der Eintauchtiefe steigt und bei einem zu tiefen Eintauchen die Pipettenspitze bzw. das Gefäß beschädigt werden können. Außerdem muss die Pipettenspitze während der Flüssigkeitsaufnahme fortwährend eintauchen, damit keine Luft eingesogen wird. Dabei ist zu berücksichtigen, dass der Flüssigkeitsspiegel im Gefäß bei der Flüssigkeitsaufnahme sinkt. Bei manuellen Pipetten muss der Benutzer ständig die Eintauchtiefe der Pipettenspitze kontrollieren und die Pipettenspitze nachführen. Bei automatischen Dosiervorrichtungen werden hierfür Überwachungs- und Steuereinrichtungen eingesetzt.

Aus der EP 1 288 635 A2 ist eine Vorrichtung mit einer Beleuchtungseinrichtung zum Beleuchten einer etwa punktförmigen Beleuchtungsstelle im Raum und einer etwa punktförmigen Lichtempfangseinrichtung mit einem Fotodetektor zum Liefern eines von der Intensität des empfangenen Lichtes abhängigen Messsignales bekannt. Die Vorrichtung weist ein abbildendes System zum Abbilden der Beleuchtungsstelle auf die etwa punktförmige Lichtempfangseinrichtung auf. Ferner hat sie eine Auswerteeinrichtung zum Erfassen der Annäherung einer Grenzfläche zwischen zwei Medien mit unterschiedlichen Brechzahlen an die Beleuchtungsstelle durch Auswerten der vom Fotodetektor gelieferten Messsignale. Wenn eine Grenzfläche zwischen zwei Medien mit unterschiedlichen Brechzahlen in die Beleuchtungsstelle eintritt, ändert sich die Intensität der von der Lichtempfangseinrichtung empfangenen Lichtstrahlung und damit das vom Fotodetektor gelieferte Messsignal stark. Somit ist feststellbar, ob sich eine Grenzfläche in der Beleuchtungsstelle befindet oder nicht.

Da der Lichtstrahl der Beleuchtungseinrichtung und das abbildende System koaxial auf die Beleuchtungsstelle ausgerichtet werden können, ist ein berührungsloses Erfassen von Grenzschichten aus größerer Distanz und unter geringem seitlichem Raumbedarf möglich. Dies begünstigt das Erfassen des Flüssigkeitsspiegels in Gefäßen mit verhältnismäßig kleiner Öffnung und/oder verhältnismäßig großer Tiefe.

Es kann gezielt mit Licht einer Wellenlänge gearbeitet werden, für die eine Flüssigkeit (z.B. Wasser) undurchsichtig ist, um einen Flüssigkeitsspiegel frei von Störungen durch nahe Gefäße zu erfassen.

Für die Bestimmung der Lage einer Grenzfläche kann die relative Lage von Beleuchtungsstelle und Grenzfläche verändert werden, bis sich die Grenzfläche in der Beleuchtungsstelle befindet. Hierfür kann die Vorrichtung eine Verstelleinrichtung zum Verstellen der relativen Lage von Beleuchtungsstelle und Grenzfläche in Richtung der optischen Achse des abbildenden Systems und/oder quer dazu aufweisen. Mittels der Verstelleinrichtung kann die relative Lage der von der Beleuchtungseinrichtung, dem abbildenden System und der Lichtsempfangseinrichtung gebildeten Optik und der Grenzfläche verstellbar sein. Es ist aber auch möglich, dass die Verstelleinrichtung ein Zoom-Objektiv im abbildenden System aufweist. Die Auswerteeinrichtung kann das Verstellen der relativen Lage von Beleuchtungsstelle und Grenzfläche durch die Verstelleinrichtung steuern. Dann kann das Verstellen in Abhängigkeit von Messsignalen erfolgen, beispielsweise um die Beleuchtungsstelle auf die Grenzfläche einzustellen und/oder entlang der Grenzfläche zu verfahren.

Für die Positionierung des Beleuchtungspunktes auf der Grenzfläche bzw. das Auffinden der Grenzfläche muß die Verstelleinrichtung vielfach lange Verfahrwege zurücklegen. Dieses kostet viel Zeit und mindert die Arbeitsgeschwindigkeit der Vorrichtung.

Aus WO 03/023370 A ist eine Transmissionsmessung von Proben bekannt geworden, welche in einer Ebene zwischen zwei optischen Systemen bewegt werden, deren optische Achse senkrecht zur Bewegungsrichtung der Proben verläuft. Beide optischen Systeme werden gemeinsam in Bewegungsrichtung verstellt. Die Optiken können auch entlang der optischen Achse verstellt werden, d.h. auf die Proben zu bzw. von diesen fort. Diese Verstellung erfolgt jedoch nicht relativ zu den einzelnen Proben bzw. während des Messvorgangs, sondern bevor ein Messvorgang bzw. eine Abtastung erfolgt. Aus WO 92/08104 A ist ein Verfahren zur Ermittlung der Topographie einer groben Oberfläche offenbart, wobei Optiken und Proben in XY-Richtung verstellbar sind. In D3 ist nicht davon die Rede, dass die Verlagerung der mindestens einen Beleuchtungsstelle quer zur optischen Achse entlang einer spezifischen Bahn erfolgen soll.

Aus US 4,339,664 A ist eine Vorrichtung und ein Verfahren zur Ermittlung der Topographie einer Masse in einem Behälter bekannt geworden. Er wird mit optischen Mitteln bearbeitet, wobei eine Abtastung auch kreisförmig erfolgen kann.

Aus DE 10 2006 009 809 A1 ist ein Verfahren zur Ermittlung der Topographie von Gegenständen offenbart, wobei die Abtastung berührend oder berührungslos um zwei Rotationsachsen erfolgt, die aufeinander senkrecht stehen oder sich kreuzen. Eine sternförmige, ringförmige oder spiralförmige Abtastung der Oberflächen ist ebenfalls erwähnt.

Aus WO 2006/063838 A1 ist ein Verfahren zum Vermessen von Außenkanten von Werkstücken mit einem Bildverarbeitungssensor bekannt geworden. Es ist ein Laserabstandssensor vorgesehen, der in der Nähe der zu messenden Außenkante den Abstand des Bildverarbeitungssensors zur Werkstückoberfläche misst und mit einem Lagerregelkreis des Koordinatenmessgeräts so verbunden ist, dass eine automatische Nachführung erfolgt. Das Werkstück wird um eine Drehachse verdreht, wobei eine Steuerung über die Sensorsignale so erfolgt, dass die mit dem Laserabstandssensor gemessenen Messpunkte auf einer Spanfläche des Werkzeugs die Einstellung der Drehachse so beeinflussen, dass die Schneidkante an diesem Ort jeweils in der Abschnittsebene des Werkzeugs zu liegen kommt. Die Abtastung folgt einer Fläche oder Linie im Raum. Die Bahn ist stets eine der Kontur des Werkzeugs folgende Bahn. Die Beleuchtungsstelle folgt somit der Kontur des Werkzeugs. Wird ein anderes Werkzeug vermessen, ergibt sich eine andere Bahn.

Aus DE 2 2005 020 705 U1 ist eine Vorrichtung zum Vermessen von dreidimensionalen Objekten mittels Lichtstrahlen bekannt geworden, die mit dem zuletzt beschriebenen Verfahren vergleichbar ist. Es wird ein Objekt abgetastet, um die Koordinaten seiner Kontur im Raum zu erfassen. Hierfür erfolgt eine Drehung zum Beispiel um eine optische Achse, wobei ein Lichtstrahl dazu auf das Werkstück trifft, während dieses rotiert. Durch die entsprechende Drehung des Werkstücks und die Bewegung in Richtung optischer Achse ergibt sich eine im Raum liegende Kurve des Beleuchtungspunktes, deren Verlauf von der Kontur des Werkstücks abhängig ist.

Der Erfindung liegt die Aufgabe zugrunde, ein optisches Sensorsystem zur Bestimmung der Höhe eines Flüssigkeitsspiegels in einem Gefäß zu schaffen, mit dessen Hilfe der maximale Reflektionspunkt in schnellstmöglicher Zeit gefunden werden kann. Diese Aufgabe wird durch die Merkmale des Anspruchs 1 gelöst.

Der Erfindung liegt ferner die Aufgabe zugrunde, ein Verfahren zur Bestimmung der Höhe eines Flüssigkeitsspiegels in einem Gefäß anzugeben, bei dem der maximale Reflexionspunkt in schnellstmöglicher Zeit aufgefunden werden kann. Diese Aufgabe wird durch die Merkmale des Anspruchs 15 gelöst.

Bei dem erfindungsgemäßen Sensorsystem sind Verstelleinrichtungen zur gleichzeitigen Verstellung der relativen Lage der mindestens einen Beleuchtungsstelle und des Flüssigkeitsspiegels in einer Richtung quer zur optischen Achse und in Richtung der optischen Achse ausgebildet und ist zwecks Ermittlung des optimalen Reflexionspunktes die Steuerungseinrichtung zum Steuern der Verlagerung der mindestens einen Beleuchtungsstelle quer zu der optischen Achse entlang einer spiralförmigen und/oder zykloidischen und/oder kreisförmigen und/oder zickzackförmigen Bahn ausgelegt.

Der Erfindung liegen insbesondere folgende Erkenntnisse zugrunde: Das optische Sensorsystem der Vorrichtung zur Behandlung von Flüssigkeiten gemäß EP 1 288 635 A2 ist darauf angewiesen, dass die Beleuchtungseinrichtung, die Lichtempfangseinrichtung und die Grenzfläche so zueinander ausgerichtet sind, dass Licht aus der Beleuchtungsstelle auf der Grenzfläche genau auf die punktförmige Lichtempfangseinrichtung reflektiert wird. Bei koaxialer Ausrichtung der Beleuchtungseinrichtung und des abbildenden Systems auf die Beleuchtungsstelle müssen die Beleuchtungseinrichtung und das abbildende System senkrecht auf die Grenzfläche gerichtet sein, damit das Licht aus der punktförmigen Beleuchtungsstelle auf die punktförmige Lichtempfangseinrichtung reflektiert wird. Ab einem bestimmten Winkel der Neigung der Grenzfläche zur Achse der Beleuchtungseinrichtung trifft das reflektierte Licht nicht mehr auf die Lichtempfangseinrichtung. Damit wird diese geneigte Grenzfläche von dem optischen Sensorsystem nicht detektiert.

In Gefäßen bilden sich die Oberflächen von Flüssigkeiten unterschiedlich aus, insbesondere in Gefäßen mit kleinen Abmessungen, wie Reaktionsgefäßen und Vertiefungen von Mikrotiterplatten. Die Formen dieser Grenzflächen werden insbesondere durch Gravitation, Dimensionen der Gefäße, Einfüllart der Flüssigkeit, Oberflächenspannung der Flüssigkeit, Benetzungseigenschaften der Wandungen der Gefäße und weitere vielschichtige Einflüsse bestimmt, die eine Vorhersage der optimalen Reflexionsstelle nicht erlauben, in der die Beleuchtungseinrichtung und das abbildende System senkrecht auf die Grenzfläche ausgerichtet sind.

Die optimale Reflexionsstelle kann insbesondere bei ebenen Flüssigkeitsoberflächen in relativ großen Gefäßen großflächig und insbesondere bei relativ unebenen Flüssigkeitsoberflächen in kleinen Gefäßen kleinflächig sein. Gerade bei von Hand pipettierten Flüssigkeitsproben kann die Flüssigkeitsoberfläche schräg stehen, da die Flüssigkeit bevorzugt an der Wandung des Gefäßes abgegeben wird. Dadurch kann die optimale Reflexionsstelle weit außermittig liegen.

Das bekannte optische Sensorsystem muss gegebenenfalls mehrfach horizontal und vertikal verfahren werden, bis die optimale Reflexionsstelle aufgefunden wird. Dementsprechend kann die Detektion der Grenzfläche lange Verfahrwege erfordern und ist der Zeitbedarf entsprechend hoch.

Die Verlagerung der Beleuchtungsstelle bei der Erfindung in einer Richtung quer zur optischen Achse kann sehr schnell erfolgen. Der Bereich der Verlagerung der Beleuchtungsstelle quer zur optischen Achse kann der Querschnittsfläche von Laborgefäßen im Füllbereich entsprechen. Die der Bewegung in Richtung der optischen Achse überlagerte Bewegung der Beleuchtungsstelle quer zur optischen Achse bestreicht - im Vergleich zu dem herkömmlichen optischen Sensorsystem - in kurzer Zeit eine größere Fläche, so dass bei Verlagerung des Beleuchtungspunktes entlang einer spiralförmigen und/oder zykloidischen und/oder zickzackförmigen Bahn schneller der optimale Reflexpunkt räumlich gekrümmten Oberflächen von Flüssigkeiten in Gefäßen (sogenannte "Menisken") gefunden werden kann. Durch die Verlagerung der Beleuchtungsstelle quer zur optischen Achse gleichzeitig mit der Verlagerung der Beleuchtungsstelle in Richtung der optischen Achse kann das Messverfahren wesentlich beschleunigt werden, da das optische Sensorsystem die optimalen Reflexionspunkte schneller findet. Infolgedessen kann die Lage von Flüssigkeitsflächen im Raum mit weniger Verlagerungen der Beleuchtungsstelle in Richtung der optischen Achse ermittelt werden. Hierdurch wird bei den Detektionsvorgängen Zeit eingespart.

Die optische Achse entspricht einer Grundausrichtung der Projektionsachse der Einrichtung zum Projizieren. Die optische Achse kann von der Projektionsachse zu Beginn eines Abtastvorganges eingenommen und/oder im Verlauf eines Abtastvorganges einmal oder wiederholt eingenommen werden.

Die Verlagerung der mindestens einen Beleuchtungsstelle nach der Erfindung erfolgt mit einer Steuerungseinrichtung zum Steuern der Verlagerung der mindestens einen Beleuchtungsstelle in einer Richtung quer zu der optischen Achse entlang einer spiralförmigen und/oder zykloidischen und/oder kreisförmigen und/oder zickzackförmigen Bahn..

Nach einer Ausgestaltung der Erfindung ist bei der Verstelleinrichtung zum Verstellen der relativen Lage der mindestens einen Beleuchtungsstelle und des Flüssigkeitsspiegels zu der optischen Achse eine Einrichtung zum Schwenken einer Projektionsachse der Einrichtung zum Projizieren bezüglich der optischen Achse und/oder eine Einrichtung zum Parallelversetzen der Projektionsachse der Einrichtung zum Projizieren bezüglich der optischen Achse.

Nach einer weiteren Ausgestaltung der Erfindung ist die Steuerungseinrichtung eine Steuerungseinrichtung zum Steuern der Verlagerung der mindestens einen Beleuchtungsstelle quer zur optischen Achse innerhalb eines begrenzten Bereiches um die optische Achse. Vorzugsweise ist die Steuerungseinrichtung eine Steuerungseinrichtung zum Steuern der Verlagerung der mindestens einen Beleuchtungsstelle quer zu der optischen Achse mit der optischen Achse etwa im Zentrum der Verlagerung.

Gemäß einer weiteren Ausgestaltung der Erfindung ist die Steuerungseinrichtung eine Steuerungseinrichtung zum Steuern der Verlagerung der mindestens einen Beleuchtungsstelle von der optischen Achse weg bis zum Erreichen eines maximalen Abstandes von der optischen Achse und/oder der Verlagerung der mindestens einen Beleuchtungsstelle von einem maximalen Abstand von der optischen Achse aus zur optischen Achse hin. Der Bewegungsablauf kann auch in umgekehrter Reihenfolge erfolgen. Dies kann mit der Bewegung entlang einer spiralförmigen Bahn kombiniert werden. Nach spiralförmiger Verlagerung bis zum maximalen Abstand kann die Rückkehr zur optischen Achse sprunghaft erfolgen. Ferner kann die Bewegung bis zum maximalen Abstand und die Bewegung zur optischen Achse zurück jeweils entlang einer spiralförmigen Bahn absolviert werden.

Gemäß einer weiteren Ausgestaltung ist die Steuerungseinrichtung eine Steuerungseinrichtung zum Steuern der Verlagerung der mindestens einen Beleuchtungsstelle wiederholt von der optischen Achse weg bis zum Erreichen eines maximalen Abstandes von der optischen Achse und von dem maximalen Abstand aus zur optischen Achse hin.

Gemäß einer Ausgestaltung ist die optische Achse vertikal ausgerichtet.

Die Auswerteeinrichtung kann die optimale Reflexionsstelle auf verschiedene Weisen ermitteln. Gemäß einer Ausgestaltung ist sie eine Auswerteeinrichtung zum Ermitteln des maximalen Messsignals beim erfindungsgemäßen Verlagern der mindestens einen Beleuchtungsstelle.

Bei dem so ermittelten maximalen Messsignal ist die Beleuchtungsstelle nicht zwangsläufig auf der optimalen Reflexionsstelle positioniert. Zur Verbesserung der Positionierung steuert gemäß einer Ausgestaltung der Erfindung die Steuerungseinrichtung nach Ermittlung eines maximalen Messsignals durch die Auswerteeinrichtung die Verlagerung der mindestens einen Beleuchtungsstelle etwa auf die Position oder in einen bestimmten Abstand von der Position in Richtung der optischen Achse, in der das maximale Messsignal ermittelt wurde, und steuert erneut die Verlagerung der mindestens einen Beleuchtungsstelle quer zu der optischen Achse und in Richtung der optischen Achse, wobei die erneute Verlagerung um eine kürzere Strecke und/oder mit einer geringeren Geschwindigkeit als die vorangegangene Verlagerung erfolgt. Hierdurch wird die Beleuchtungsstelle näher an der optimalen Reflexionsstelle positioniert. Der Vorgang kann mehrfach wiederholt werden.

Das optische Sensorsystem detektiert Spiegelflächen von Flüssigkeiten, um deren Höhe zu bestimmen. Dies auch bei diffus oder gerichtet reflektierenden Flächen. Gemäß einer weiteren Ausgestaltung der Erfindung ist die Lichtquelle mindestens ein Laser, eine LED oder ein Glühlämpchen. Der Laser ist beispielsweise ein Halbleiterlaser, insbesondere eine Laserdiode.

Gemäß einer Ausgestaltung der Erfindung gibt die Lichtquelle Licht mit einer Wellenlänge ab, das in besonders starkem Maße von einer zu detektierenden Flüssigkeit reflektiert wird. Falls mit Licht einer Wellenlänge gearbeitet wird, für das die Flüssigkeit nahezu bis vollständig undurchsichtig ist, kann der Flüssigkeitsspiegel frei von Störungen durch nahe Gefäßwände erfasst werden. Ist die Flüssigkeit für Licht einer bestimmten Wellenlänge durchsichtig, kann mit diesem Licht durch die Flüssigkeit hindurch die Lage eines Gefäßbodens ermittelt werden. Die geeignete Wellenlänge für die Detektion einer Flüssigkeit kann von deren Zusammensetzung (z.B. wässrige oder organische Lösung) abhängig sein. In Betracht kommen Wellenlängen in einem weiten Bereich, der sichtbares und unsichtbares Licht (IR- und UV-Strahlung) einschließt. Insbesondere für den Bereich des sichtbaren Lichtes stehen Laserdioden zur Verfügung.

Der die Beleuchtungsstelle beleuchtende Lichtstrahl kann einen Aperturwinkel von 8° oder darunter haben, so dass der Lichtstrahl ohne Abblendung im Randbereich in Gefäße mit verhältnismäßig kleinem Öffnungsdurchmesser und/oder großer Tiefe einführbar ist. Dieses können insbesondere Gefäße mit einem Füllvolumen im mL-Bereich und darunter sein, die vielfach für die Aufnahme von Flüssigkeiten in Dosierstationen und vollautomatischen Behandlungsstationen verwendet werden.

Der Abstand der mindestens einen Beleuchtungsstelle von dem abbildenden System kann 100 mm oder mehr haben, wodurch eine berührungslose Messung des Flüssigkeitsspiegels in vielen gebräuchlichen Gefäßen vorstehender Art möglich ist.

Die mindestens eine Beleuchtungsstelle kann auf verschiedene Weisen erzeugt werden. Beispielsweise kann die Beleuchtungsstelle von einem linienförmigen Lichtstrahl beleuchtet sein, der beispielsweise mittels eines Lasers erzeugt werden kann. Durch mindestens eine Einrichtung zum Abbilden kann auf dem linienförmigen Lichtstrahl mindestens eine punktförmige Beleuchtungsstelle definiert werden, die auf mindestens einen Fotodetektor abgebildet wird.

Die Einrichtung zum Projizieren kann eine einzige Lichtquelle und mindestens eine Einrichtung zum Abbilden der Lichtquelle auf mindestens eine Beleuchtungsstelle aufweisen. Diese Einrichtung zum Projizieren kann insbesondere eine einzige Beleuchtungsstelle beleuchten. Zum gleichzeitigen Projizieren von Licht auf mehrere verschiedene Beleuchtungsstellen und/oder zum gleichzeitigen Projizieren von Licht auf dieselbe Beleuchtungsstelle unter verschiedenen Winkeln gemäß einer Ausgestaltung ist eine entsprechende Einrichtung zum Projizieren vorgesehen.

Gemäß einer anderen Ausgestaltung umfaßt die Einrichtung zum Projizieren mehrere Lichtquellen und mindestens eine Einrichtung zum Abbilden der mehreren Lichtquellen auf mindestens eine Beleuchtungsstelle. Bei dieser Ausgestaltung wird das Licht mehrerer Lichtquellen zum gleichzeitigen Projizieren von Licht auf mehrere Beleuchtungsstellen und/oder zum gleichzeitigen Projizieren von Licht auf dieselbe Beleuchtungsstelle unter verschiedenen Winkeln herangezogen.

Der mindestens eine Fotodetektor ist punktförmig, linienförmig oder flächig. Der mindestens eine Fotodetektor kann beispielsweise eine Fotodiode, eine Fotodiodenzeile, eine Fotodiodenmatrix oder ein Flächenfotodetektor sein. Vorzugsweise entspricht die Form des Fotodetektors der Form der Beleuchtungsstelle, die auf den Fotodetektor abgebildet wird. Vorzugsweise wird also eine punktförmige Beleuchtungsstelle auf einen punktförmigen Fotodetektor, eine linienförmige Beleuchtungsstelle auf einen linienförmigen Fotodetektor und eine flächige Beleuchtungsstelle auf einen flächigen Fotodetektor abgebildet.

Ein punktförmiger Fotodetektor kann ein Fotodetektor mit einer besonders kleinen lichtempfindlichen Fläche sein. Nach einer Ausgestaltung ist im Strahlengang zwischen der mindestens einen Einrichtung zum Abbilden und dem mindestens einen Fotodetektor mindestens eine Blende und/oder mindestens ein Lichtleiter angeordnet. Die Blende bzw. der Lichtleiter begrenzt den Lichtdurchgang auf einen punktförmigen Bereich der lichtempfindlichen Fläche des Fotodetektors, so daß ein gleichsam punktförmiger Fotodetektor erhalten wird.

Es kann ein einziger Fotodetektor und mindestens eine Einrichtung zum Abbilden mindestens einer Beleuchtungsstelle auf den Fotodetektor vorhanden sein. Bevorzugt bildet die mindestens eine Einrichtung zum Abbilden mehrere Beleuchtungsstellen auf den einzigen Fotodetektor ab, um das Auffinden einer optimalen Reflexionsstelle zu erleichtern. Einbezogen sind aber auch Ausführungen, bei denen die Einrichtung zum Abbilden nur eine Beleuchtungsstelle auf den Fotodetektor abbildet, auf die Licht unter verschiedenen Winkeln projiziert wird, um Licht unter einem Einfallswinkel auf die Beleuchtungsstelle zu projizieren, für den die Reflexionsstelle optimal ist.

Gemäß einer Ausgestaltung weist die mindestens eine Einrichtung zum Abbilden der mindestens einen Lichtquelle und/oder die mindestens eine Einrichtung zum Abbilden der mindestens einen Beleuchtungsstelle eine Linse auf.

Gemäß einer Ausgestaltung hat die Auswerteeinrichtung Mittel zum Filtern des von dem mindestens einen Fotodetektor gelieferten Meßsignals. Hierdurch können Rauschanteile des Meßsignals unterdrückt und Fremdlichteinflüsse und andere Störungen ausgeschaltet werden. Hierfür werden beispielsweise die beim Verlagern der mindestens einen Beleuchtungsstelle von den Fotodetektoren gelieferten Messsignale abgeleitet und die Grenzfläche an der Stelle ermittelt, an der die Ableitung den Wert Null annimmt. Weitere Auswerteverfahren (z.B. logarithmisch, Integration höherer Ordnung) zum Herausfiltern der Rauschsignale aus dem Meßsignal stehen zur Verfügung. Durch das Filtern der Messsignale wird die Empfindlichkeit des optischen Sensorsystems und die Schnelligkeit der Detektion von Grenzflächen mittels des optischen Sensorsystems gesteigert.

Für das Verstellen in Richtung der optischen Achse der mindestens einen Einrichtung zum Abbilden hat die Verstelleinrichtung gemäß einer weiteren Ausgestaltung ein Zoom-Objektiv und/oder Autofokus-System in dem mindestens einen Einrichtung zum Abbilden vorgesehen ist.

Gemäß einer Ausgestaltung sind die Verstelleinrichtungen motorgetrieben, z.B. für eine Integration in eine automatische Vorrichtung zur Bestimmung der Höhe von Flüssigkeitsspiegeln.

Die Steuerungseinrichtung steuert das Verstellen der relativen Lage der mindestens einen Beleuchtungsstelle und der Flüssigkeitsfläche durch die Verstelleinrichtungen. Die Steuerungseinrichtung gemeinsam mit der Auswerteeinrichtung kann das Verstellen in Abhängigkeit von den Messsignalen vornehmen, um mindestens eine Beleuchtungsstelle auf die Flüssigkeitsfläche einzustellen und/oder entlang dieser zu verfahren.

Gemäß einer Ausgestaltung ist das optische Sensorsystem an einer automatischen Vorrichtung zur Behandlung von Flüssigkeiten angeordnet.

Bei dem Verfahren nach der Erfindung nach Anspruch 15 sind folgende Schritte vorgesehen:
- Ein fokussierter Lichtstrahl wird in Richtung einer optischen Achse auf mindestens eine Beleuchtungsstelle im Gefäß projiziert, die relative Lage der mindestens einen Beleuchtungsstelle und des Flüssigkeitsspiegels in einer Richtung quer zur optischen Achse und in Richtung der optischen Achse wird verändert,
- die mindestens eine Beleuchtungsstelle wird auf mindestens einen Fotodetektor abgebildet und
- das Messignal des Fotodetektors wird ausgewertet,
- die relative Lage der mindestens einen Beleuchtungs stelle und des Flüssigkeitsspiegels wird quer zur optischen Achse und gleichzeitig in Richtung der optischen Achse verändert und
- zur Bestimmung des optimalen Reflexionspunktes wird die mindestens eine Beleuchtungsstelle spiralförmig und/oder zykloidisch und/oder zickzackförmig quer zu der optischen Achse verlagert.

Die Verlagerung kann auf den Nahbereich der optischen Achse beschränkt werden, der etwa der Größe des Querschnitts der Gefäße entspricht, in denen der Flüssigkeitsspiegel abgetastet werden soll. Während der Veränderung der relativen Lage der mindestens einen Beleuchtungsstelle und der Flüssigkeitsfläche wird die mindestens eine Beleuchtungsstelle auf mindestens einem Fotodetektor abgebildet. Durch Auswertung des Messsignals mindestens eines Fotodetektors ist feststellbar, wo sich die Flüssigkeitsfläche der Höhe nach in der mindestens einen Beleuchtungsstelle befindet. Bei der Ortung in der mindestens einen Beleuchtungsstelle, kann die Veränderung der relativen Lage der mindestens einen Beleuchtungsstelle und der Grenzfläche abgebrochen werden.

Die Beleuchtungsstelle ist eine Stelle im Raum, auf die Licht projiziert wird.

Die mindestens eine Beleuchtungsstelle wird spiralförmig und/oder zykloidisch und/oder zickzackförmig zu der optischen Achse verlagert.

Gemäß einer weiteren Ausgestaltung wird die mindestens eine Beleuchtungsstelle innerhalb vorgegebener Grenzen um die optische Achse verlagert.

Gemäß einer weiteren Ausgestaltung ist die optische Achse vertikal ausgerichtet.

Gemäß einer weiteren Ausgestaltung wird die mindestens eine Beleuchtungsstelle immer weiter von der optischen Achse weg bis zum Erreichen eines maximalen Abstandes von der optischen Achse verlagert und/oder wird die mindestens eine Beleuchtungsstelle von einem maximalen Abstand von der optischen Achse aus immer näher zur optischen Achse hin bewegt. Dies kann auch mehrfach und/oder in umgekehrter Reihenfolge durchgeführt werden.

Gemäß einer weiteren Ausgestaltung wird die mindestens eine Beleuchtungsstelle wiederholt von der optischen Achse weg bis zum Erreichen eines maximalen Abstandes von der optischen Achse und vom dem maximalen Abstand aus zur optischen Achse hin verlagert. Dies kann auch wiederholt und/oder in umgekehrter Abfolge durchgeführt werden.

Gemäß einer weiteren Ausgestaltung wird nach Ermittlung eines maximalen Messsignals die mindestens eine Beleuchtungsstelle etwa auf die oder in einem geringeren Abstand von der Position entlang der optischen Achse eingestellt, in der das maximale Messsignal ermittelt wurde und erneut das maximale Messsignal mindestens eines Fotodetektors beim Verlagern der mindestens einen Beleuchtungsstelle in Richtung quer zu der optischen Achse und in Richtung der optischen Achse ermittelt, wobei die mindestens eine Beleuchtungsstelle um eine kürzere Strecke und/oder mit einer geringeren Geschwindigkeit als zuvor verlagert wird.

Gemäß einer weiteren Ausgestaltung wird die Lage der mindestens einen Beleuchtungsstelle beim Maximum des Messsignals als Lage der Grenzfläche und/oder als Lage des optimalen Reflexionspunktes auf der Grenzfläche bestimmt.

Die Erfindung wird nachfolgend mit Bezug auf die anliegenden Zeichnungen von Ausführungsbeispielen näher erläutert. In den Zeichnungen zeigen:
- Fig. 1: einen Lichtstrahl an einer optimalen Reflexionsstelle einer konkav gekrümmten Grenzfläche einer Flüssigkeit in einem Gefäß in einem Vertikalschnitt;
- Fig. 2: einen Lichtstrahl an einer optimalen Reflexionsstelle einer konvex gekrümmten Grenzfläche einer Flüssigkeit in einem Gefäß in einem Vertikalschnitt;
- Fig. 3: Lage einer idealen Reflexionsstelle der Grenzfläche einer Flüssigkeit in einem Gefäß in der Draufsicht;
- Fig. 4: Lage einer realen Reflexionsstelle der Grenzfläche einer Flüssigkeit in einem Gefäß in einer Draufsicht;
- Fig. 5a, b und c: ein ausgelenkter Lichtstrahl (Fig. 5a), ein rotierender Lichtstrahl (Fig. 5b) und mehrere parallele Lichtstrahlen (Fig. 5c) an einer konkav gekrümmten Grenzfläche einer Flüssigkeit in einem Gefäß in einem Vertikalschnitt;
- Fig. 6a, b und c: ein ausgelenkter Lichtstrahl (Fig. 6a), ein rotierender Lichtstrahl (Fig. 6b) und mehrere parallele Lichtstrahlen (Fig. 6c) an einer konvex gekrümmten Grenzfläche einer Flüssigkeit in einem Gefäß in einem Vertikalschnitt;
- Fig. 7a und d: Abtasten der realen Grenzfläche einer Flüssigkeit in einem Gefäß mittels eines spiralförmig verlagerten Lichtstrahles (Fig. 7a) mehrerer matrixartig angeordneter Lichtstrahlen (Fig. 7d) in der Draufsicht;
- Fig. 7b: und c Verlagerung spiralförmig verstellter Beleuchtungsstellen in Richtung der optischen Achse stufenweise auf verschiedenen Niveaus (Fig. 7b) und kontinuierlich (Fig. 7c);
- Fig. 8: optisches Sensorsystem mit mehreren Lichtquellen und mehreren Fotodetektoren in schematischer Seitenansicht;
- Fig. 9: optisches Sensorsystem mit mehreren virtuellen Lichtquellen und mehreren Fotodetektoren in schematischer Seitenansicht;
- Fig. 10: optisches Sensorsystem mit mehreren virtuellen Lichtquellen und einem Fotodetektor mit vorgeordneter Lichtzusammenführung in schematischer Seitenansicht;
- Fig. 11: optisches Sensorsystem mit mehreren Lichtquellen und einem Fotodetektor mit vorgeordneter Lichtzusammenführung in schematischer Seitenansicht;
- Fig. 12: optisches Sensorsystem mit einer Lichtquelle mit divergierenden Lichtstrahlen und mehreren Fotodetektoren mit konvergierender Ausrichtung in schematischer Seitenansicht;
- Fig. 13: optisches Sensorsystem mit auf geneigte Grenzflächen gerichteten divergierenden Lichtstrahlen und mehreren parallelen Fotodetektoren in schematischer Seitenansicht;
- Fig. 14: optisches Sensorsystem mit mehreren Lichtquellen mit unter verschiedenen Winkeln auf einen gemeinsamen Beleuchtungspunkt gerichteten Lichtstrahlen und mehreren darauf ausgerichteten Fotodetektoren in schematischer Seitenansicht;
- Fig. 15: Blockschaltbild eines optischen Sensorsystems gemäß Fig. 10;
- Fig. 16: beispielhafte Anordnung von Mikrotiterplatten in einer Vorrichtung zur Behandlung von Flüssigkeiten mit einem optischen Sensorsystem insbesondere für Lageerkennung und Identifizierung von Labware in der Draufsicht;
- Fig. 17: beispielhafte Anordnung von Laborwaren in einer Vorrichtung zur Behandlung von Flüssigkeiten mit einem optischen Sensorsystem insbesondere für Lageerkennung und Identifizierung von Laborwaren;
- Fig. 18: optisches Sensorsystem beim Abtasten eines Barcodes in einer schematischen Seitenansicht;
- Fig. 19: optisches Sensorsystem mit einer verstellbaren Projektions- und Abbildungseinrichtung zum spiralförmigen Abtasten einer Grenzfläche in Seitenansicht;
- Fig. 20: optisches Sensorsystem gemäß Fig. 19 beim Abtasten eines Barcodes;
- Fig. 21: optisches Sensorsystem gemäß Fig. 19 beim Abtasten eines seitlich am Objekt angebrachten Barcodes.

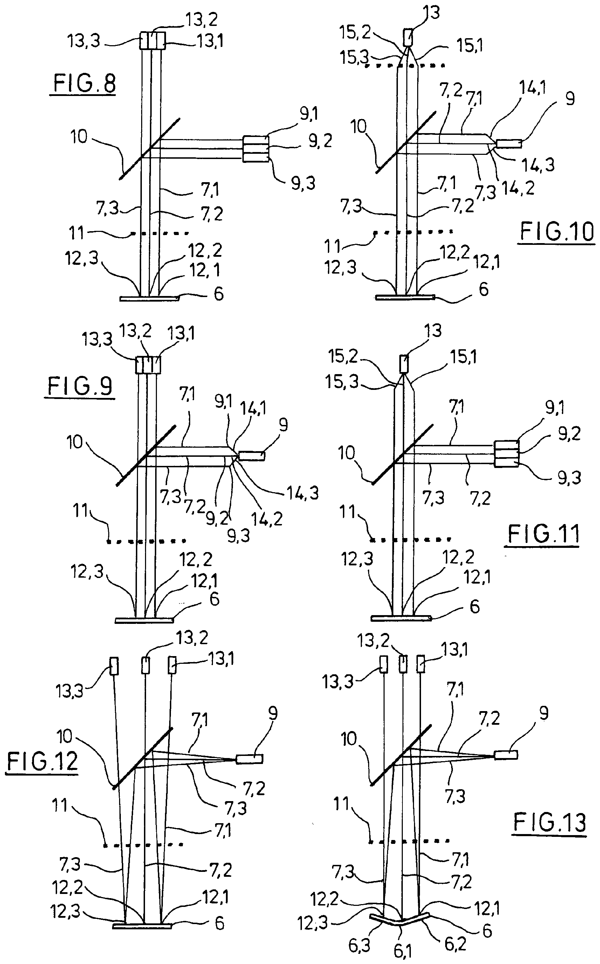

Die Figuren 8 bis 14, 18, 20, 21 und die zugehörige Beschreibung gehören nicht zum Gegenstand der Ansprüche.

Bei der nachfolgenden Beschreibung sind übereinstimmende Teile verschiedener Ausführungsbeispiele mit denselben Bezugsziffern bezeichnet.

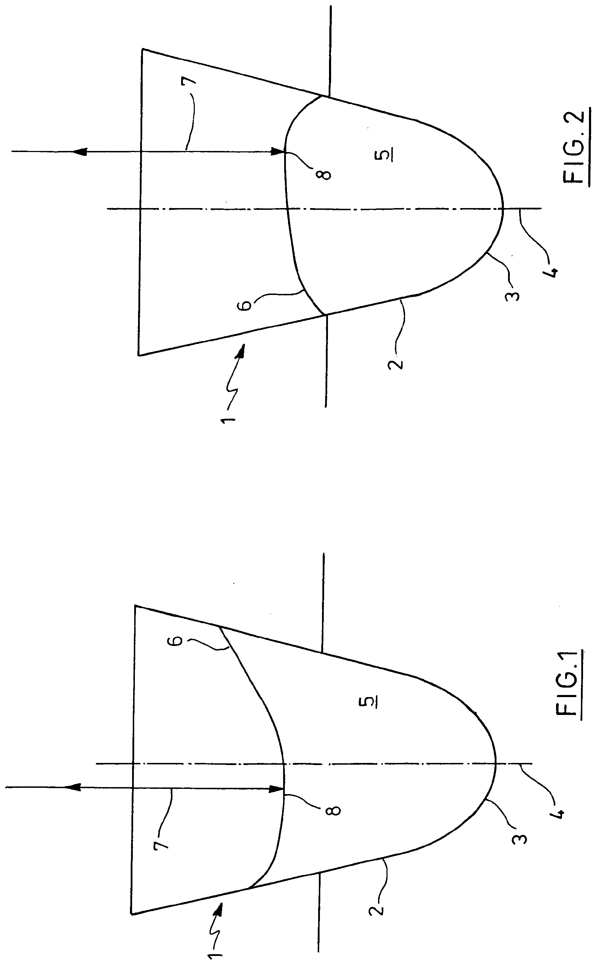

Die Fig. 1 bis 7 zeigen Beispiele für die Ausbildung des Flüssigkeitsspiegels in einem Reaktionsgefäß mit einem Fassungsvermögen im Bereich von einem Bruchteil eines Milliliters bis zu einigen Millilitern. Derartige Reaktionsgefäße werden z.B. von der Anmelderin unter der Bezeichnung "Eppendorf Röhrchen" bzw. "Eppendorf Tubes" vermarktet.

Die Gefäße 1 sind im unteren Bereich 2 konisch und haben einen innen konkav gewölbten Gefäßboden 3. Die Gefäße 1 sind mit ihrer Achse 4 vertikal ausgerichtet.

Gemäß Fig. 1 hat eine im Gefäß 1 angeordnete Flüssigkeit 5 einen konkav gekrümmten "Meniskus" bzw. Grenzfläche 6.

Ein parallel zur Gefäßachse 4 auf die Grenzfläche 6 gerichteter Lichtstrahl 7 trifft in einer optimalen Reflexionsstelle 8 senkrecht auf die Grenzfläche 6. Aus der optimalen Reflexionsstelle 8 wird er parallel zur Gefäßachse 4 reflektiert. Eine Vorrichtung zum Erfassen von Grenzflächen gemäß Fig. 1 der EP 1 288 635 A2 kann bei Ausrichtung des Lichtstrahles auf die optimale Reflexionsstelle 8 die Lage der Grenzfläche 6 ermitteln.

Fig. 2 zeigt die optimale Reflexionsstelle 8 an einer konvex gekrümmten Grenzfläche 6 in dem Gefäß 1.

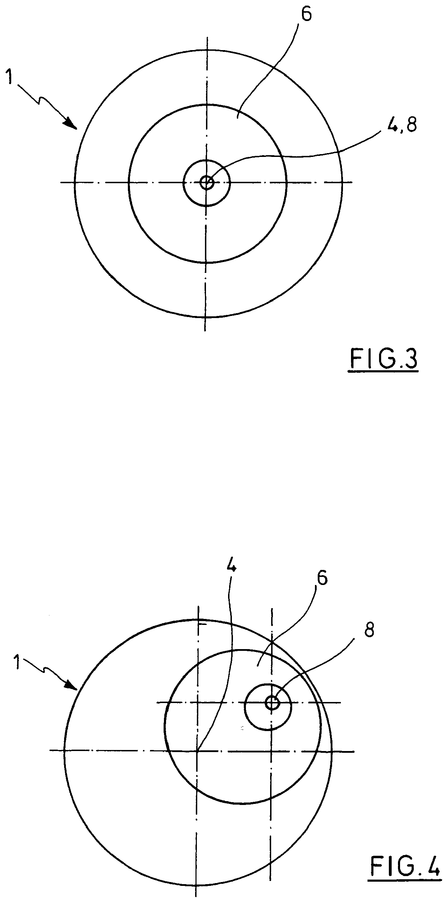

Gemäß Fig. 3 ist die optimale Reflexionsstelle 8 im Idealfall auf der Mittelachse 4 des Gefäßes 1 angeordnet. Wenn die Lage des Gefäßes 1 bekannt ist, kann der Füllstand mittels der Vorrichtung zum Erfassen von Grenzflächen gemäß EP 1 288 635 A2 leicht bestimmt werden. Gemäß Fig. 4 ist die optimale Reflexionsstelle 8 real außermittig angeordnet. Ein Sensorsystem gemäß EP 1 288 635 A2 muß vertikal und horizontal verfahren werden, um die optimale Reflexionsstelle 8 zu finden.

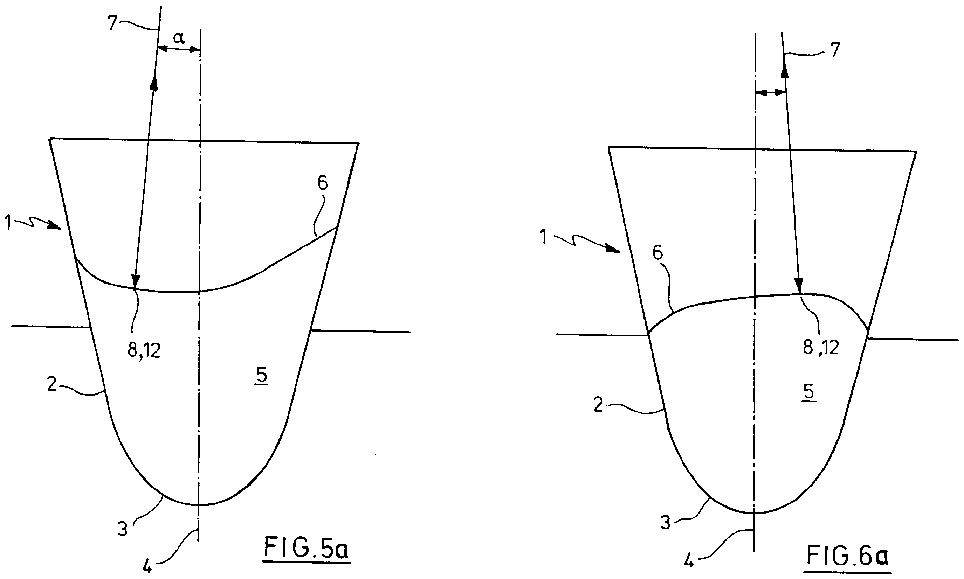

Erfindungsgemäß wird gemäß Fig. 5a und 6a ein Lichtstrahl 7 aus der Gefäßachse 4, die zugleich eine optische Achse einer Einrichtung zum Projizieren ist, ausgelenkt. In Fig. 5a und 6a ist der Lichtstrahl 7 beim Auftreffen auf die optimale Reflexionsstelle 8 auf der Grenzfläche 6 im Gefäß gezeigt. In dieser Situation ist das reflektierte Licht mittels eines nicht gezeigten Fotodetektors detektierbar, der auf die Reflexionsstelle 8 gerichtet ist.

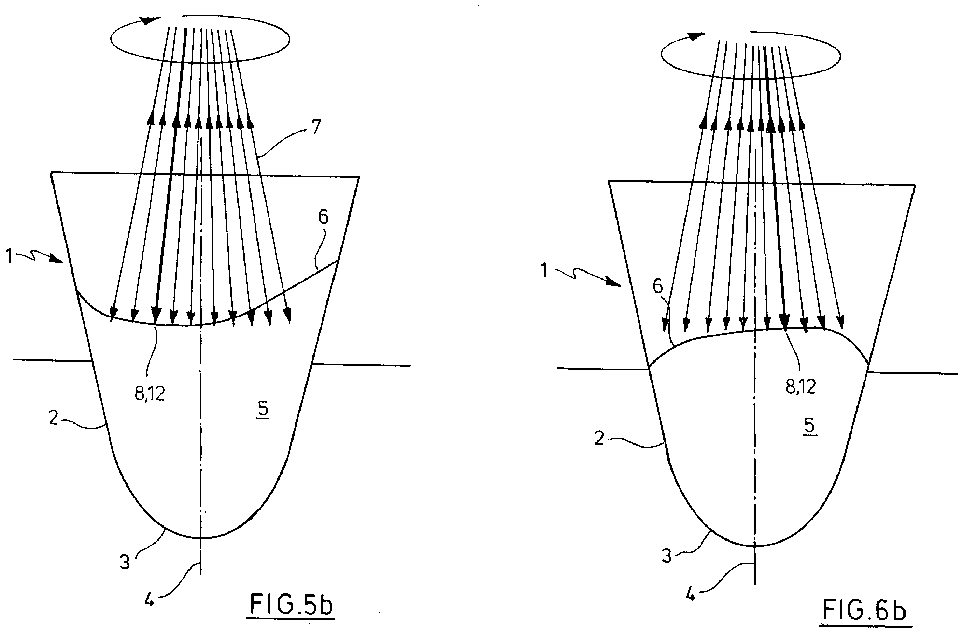

Die Fig. 5b und 6b zeigen den rotierenden Lichtstrahl 7 beim Abtasten der Grenzfläche 6. Der auf die optimale Reflexionsstelle 8 gerichtete Lichtstrahl 7 ist grafisch hervorgehoben.

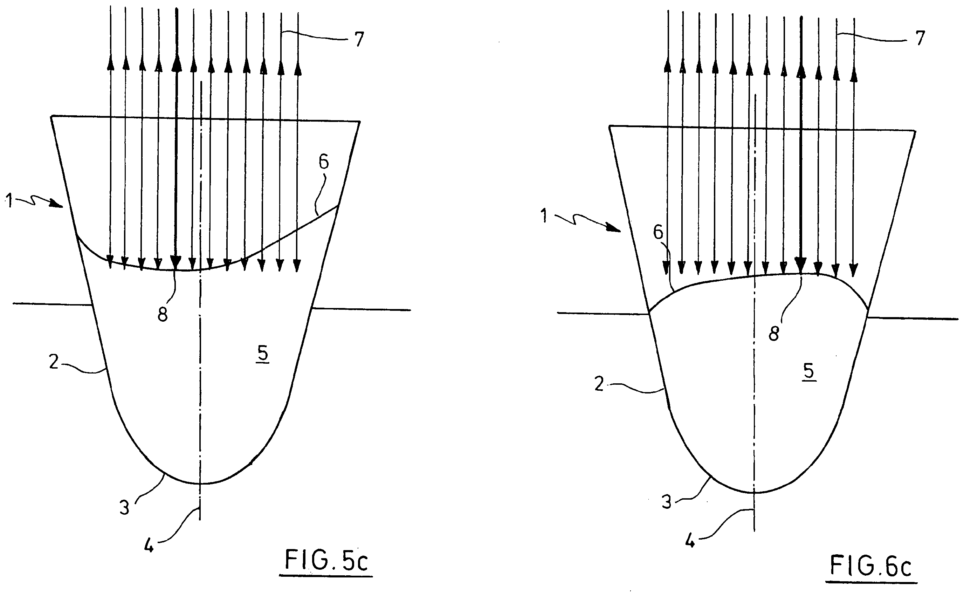

Gemäß einer Ausgestaltung der Erfindung werden entsprechend Fig. 5c und 6c mehrere parallele Lichtstrahlen 7 auf die Grenzfläche 6 im Gefäß 1 gerichtet. Jeweils einer der parallelen Lichtstrahlen 7 trifft auf die optimale Reflexionsstelle 8. Das reflektierte Licht ist somit mittels eines nicht gezeigten Fotodetektors detektierbar, der auf das reflektierte Licht ausgerichtet ist. Die Verfahren gemäß Fig. 5a, 5b und 5c bzw. 6a, 6b und 6c werden kombiniert durchgeführt.

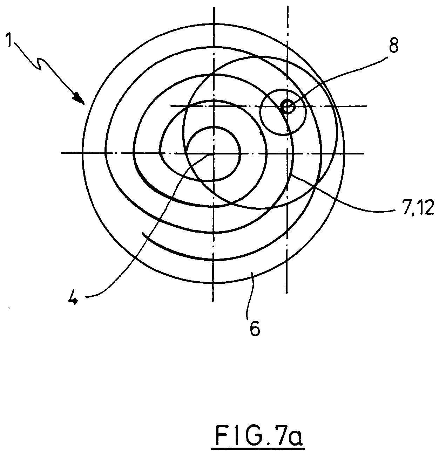

Fig. 7a zeigt das Auffinden der optimalen Reflexionsstelle 8 durch spiralförmiges Bewegen des Lichtstrahles 7 bzw. der Beleuchtungsstelle 12 über die Grenzfläche 6. Wenn die Beleuchtungsstelle 12 der optimalen Reflexionsstelle 8 am nächsten ist, liefert der Fotodetektor das stärkste Signal.

Die Beleuchtungsstelle hat beispielsweise einen Durchmesser von etwa 0,3 mm und die Bahnen der Beleuchtungsstelle 12 haben beispielsweise einen Abstand von 0,2 mm voneinander, um nahezu jeden Punkt der Grenzfläche zu bestreichen. Dies gilt auch für andere als spiralförmige Verlagerungen der Beleuchtungsstelle.

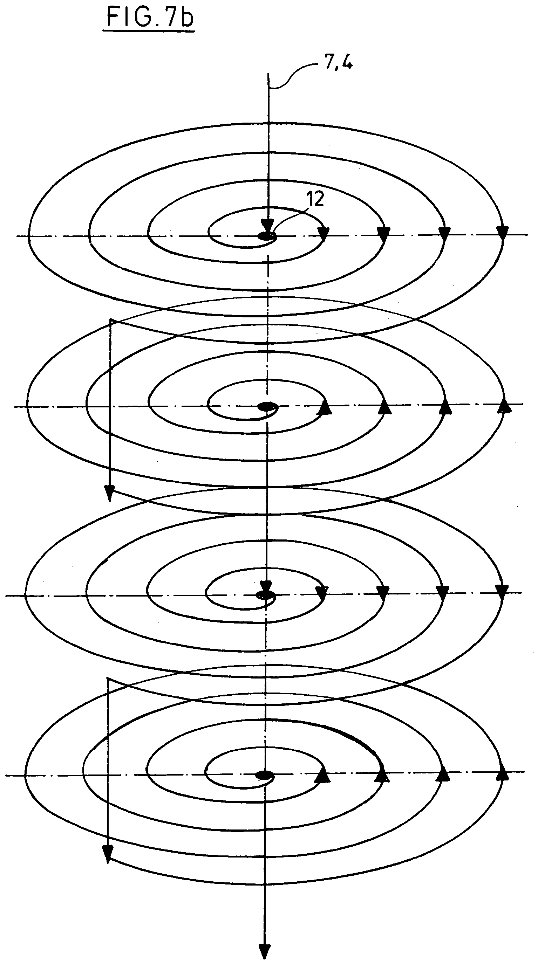

Gemäß Fig. 7b wird der Lichtstrahl 7 schrittweise in verschiedenen Ebenen entlang der optischen Achse 4 bewegt. In der obersten Ebene (bezogen auf die zeichnerische Darstellung) wird der spiralförmig von der optischen Achse 4 aus bis auf einen maximalen Abstand von der optischen Achse 4 bewegt. Danach wird er parallel zur optischen Achse 4 in die nächsttiefere Ebene bewegt. Dort wird er vom maximalen Abstand von der optischen Achse 4 spiralförmig bis auf die optische Achse 4 verlagert. Danach wird die Beleuchtungsstelle 12 auf der optischen Achse 4 bis zur nächsttieferen Ebene bewegt. Dort wird er wieder spiralförmig nach außen bis auf einen maximalen Abstand von der optischen Achse 4 bewegt usw..

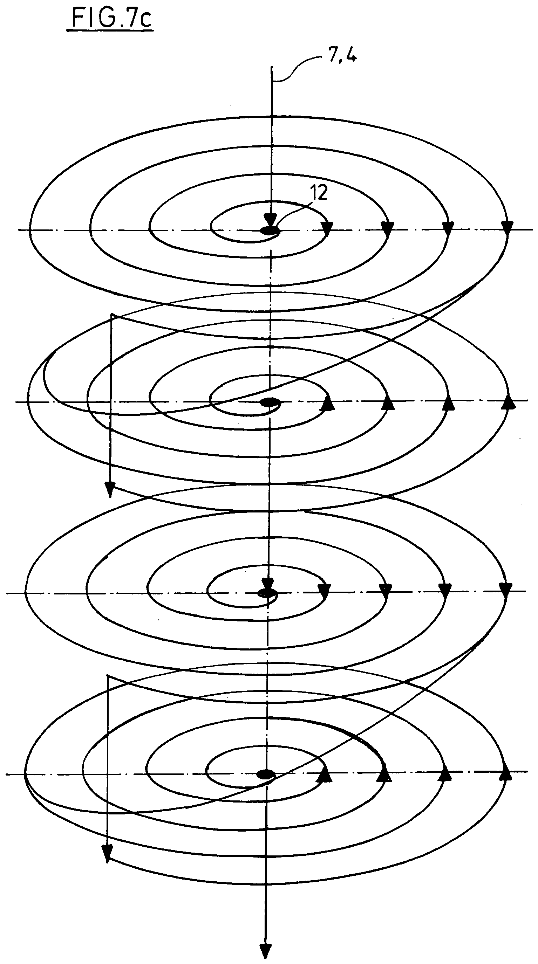

Gemäß Fig. 7c führt die vom Lichtstrahl 7 beleuchtete Beleuchtungsstelle 12 eine überlagerte spiralförmige Bewegung um die optische Achse 4 und in Richtung der optischen Achse 4 nach unten aus. Die spiralförmige Bewegung geht von der optischen Achse 4 aus bis auf einen maximalen Abstand von der optischen Achse 4 und von dem maximalen Abstand zur optischen Achse 4 zurück.

Die Abtastprozeduren gemäß Fig. 7b und 7c können abgebrochen werden, sobald die größte Annäherung der Beleuchtungsstelle 12 an die optimale Reflexionsstelle 8 festgestellt wird.

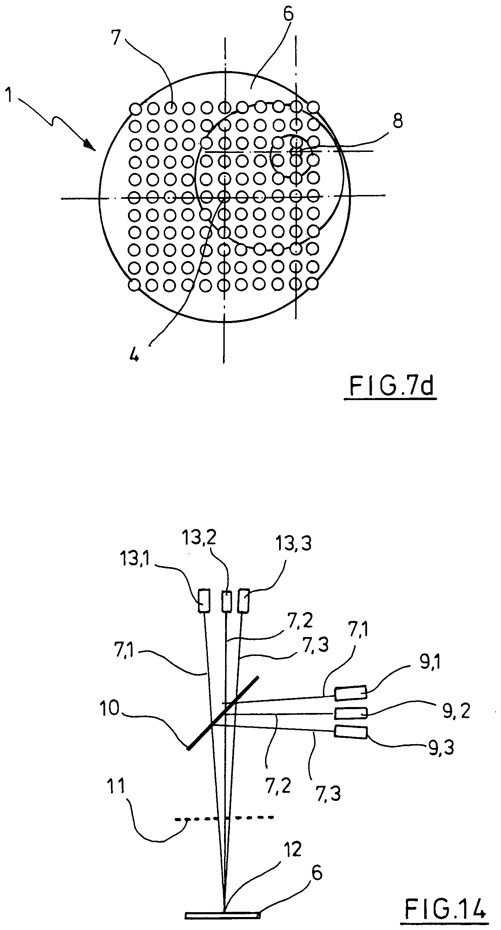

Fig. 7d veranschaulicht das Auffinden der optimalen Reflexionsstelle 8 mittels einer matrixartigen Anordnung von Lichtstrahlen 7 an einer realen Grenzfläche 6 entsprechend Fig. 4. Die optimale Reflexionsstelle 8 ist grundsätzlich in einem einzigen Abtastvorgang auffindbar. Gegebenenfalls muss eine Einrichtung zum Projizieren der Lichtstrahlen 7 in der Vertikalen (senkrecht zur Zeichenebene) verfahren werden, um einen Lichtstrahl 7 an der optimalen Reflexionsstelle 8 auf der Grenzfläche 6 zu fokussieren. Das Verfahren von Fig. 7d wird mit dem Verfahren von Fig. 7a kombiniert.

Mehrere Lichtstrahlen 7 zum Abtasten der Grenzfläche 6 können auf verschiedene Weisen erzeugt werden. Nachfolgend sind hierfür einige Beispiele erläutert:
Gemäß Fig. 8 sind parallele Lichtstrahlen 7.1, 7.2, 7.3 aus parallelen Lichtquellen 9.1, 9.2, 9.3 auf einen Strahlteiler 10 gerichtet. Vom Strahlteiler 10 werden die Lichtstrahlen 7.1, 7.2, 7.3 auf ein Linsenarray 11 reflektiert. Das Linsenarray 11 hat eine Vielzahl nebeneinander angeordneter Linsen, wobei jedem Lichtstrahl 7.1, 7.2, 7.3 eine Linse zugeordnet ist. Durch das Linsenarray 11 werden die Lichtstrahlen 7.1, 7.2, 7.3 auf rasterartig angeordnete Beleuchtungsstellen 12.1, 12.2, 12.3 fokussiert.

Im Beispiel treffen sämtliche Lichtstrahlen 7.1, 7.2, 7.3 senkrecht auf eine reflektierende Grenzfläche 6, so dass das Licht in Richtung der einfallenden Lichtstrahlen 7.1, 7.2, 7.3 reflektiert wird. Das reflektierte Licht wird durch das Linsenarray 11 und den Strahlenteiler 10 auf parallele Fotodetektoren 13.1, 13.2, 13.3 abgebildet.

Das Linsenarray 11 fokussiert die Lichtstrahlen 7.1, 7.2, 7.3 auf Beleuchtungsstellen 12.1, 12.2, 12.3 und das aus den Beleuchtungsstellen reflektierte Licht auf die Fotodetektoren 13.1, 13.2, 13.3. Wenn sich die Beleuchtungsstellen 12.1, 12.2, 12.3 auf der Grenzfläche 6 befinden, ist die von den Fototdetektoren 13.1, 13.2, 13.3 empfangene Lichtmenge maximal. Die Messsignale der Fotodetektoren 13.1, 13.2, 13.3 zeigen damit an, dass sich die Beleuchtungsstellen 12.1, 12.2, 12.3 auf der Grenzfläche 6 befinden. Damit ist der Abstand der Grenzfläche 6 vom optischen Sensorsystem bekannt.

In Fig. 8 ist die Grenzfläche 6 eben. Bei einer unebenen Grenzfläche 6 trifft nur ein senkrecht auf einen Bereich dieser Grenzfläche auftreffender Lichtstrahl 7.1 oder 7.2 oder 7.3 auf die optimale Reflexionsstelle 8. Das reflektierte Licht wird vom Fotodetektor 13.1 oder 13.2 oder 13.3 empfangen, auf den die betreffende Beleuchtungsstelle 12.1 oder 12.2 oder 12.3 abgebildet wird. Das Messsignal dieses Fotodetektors 13.1 oder 13.2 oder 13.3 indiziert das Auffinden der optimalen Reflexionsstelle 8, so dass der Abstand der Grenzfläche 6 vom optischen Sensorsystem auf einer nicht planen Grenzfläche 6 feststellbar ist.

Das optische Sensorsystem von Fig. 9 weist nur eine einzige Lichtquelle 9 auf. Das Licht dieser Lichtquelle wird über einen sich auffächernden Lichtleiter 14.1, 14.2, 14.3 auf mehrere virtuelle Lichtquellen 9.1, 9.2, 9.3 aufgeteilt. Die davon ausgehenden Lichtstrahlen 7.1, 7.2, 7.3 werden wiederum in der bereits beschriebenen Weise über eine Anordnung aus Strahlteiler 10 und Linsenarray 11 auf Beleuchtungsstellen 12.1, 12.2, 12.3 fokussiert. Die aus optimalen Beleuchtungsstellen reflektierten Lichtstrahlen werden auf parallele Fotodetektoren 13.1, 13.2, 13.3 abgebildet.

Das optische Sensorsystem von Fig. 10 unterscheidet sich von dem Vorbeschriebenen dadurch, dass es nur einen Fotodetektor 12 aufweist. Dem Fotodetektor 12 vorgeordnet sind sich vereinigende bzw. miteinander verschmelzende Lichtleiter 15.1, 15.2, 15.3. Die aufgefächerten Enden der Lichtleiter 15.1, 15.2, 15.3 sind jeweils einem Lichtstrahl 7.1, 7.2, 7.3 zugeordnet. Das aus den Beleuchtungsstellen 12.1, 12.2, 12.3 in Richtung der einfallenden Lichtstrahlen 7.1, 7.2, 7.3 reflektierte Licht wird auf die Eingänge der Lichtleiter 15.1, 15.2, 15.3 abgebildet. Das dort eintreffende Licht wird gebündelt dem Fotodetektor 13 zugeführt. Die Anordnung einer optimalen Reflexionsstelle 8 der Grenzfläche 6 in mindestens einer Beleuchtungsstelle 12.1, 12.2, 12.3 zeigt sich in einem erhöhten Meßsignal des Fotodetektors 13.

Das optische Sensorsystem gemäß Fig. 11 kombiniert die mehreren Lichtquellen 9.1, 9.2, 9.3 des optischen Sensorsystems von Fig. 8 mit sich vereinigenden Lichtleitern 15.1, 15.2, 15.3 und einem nachgeordneten Fotodetektor 13 von Fig. 10. Die virtuellen Lichtquellen von Fig. 10 sind also durch tatsächliche Lichtquellen 9.1, 9.2, 9.3 ersetzt. Falls zumindest eine Beleuchtungsstelle 12.1, 12.2, 12.3 auf eine optimale Reflexionsstelle 8 einer Grenzfläche 6 trifft, zeigt sich das in einem Anstieg des vom Fotodetektor 13 gelieferten Messsignals.

Bei der Anordnung von Fig. 12 liefert eine Lichtquelle 9 divergierende Lichtstrahlen 7.1, 7.2, 7.3, die vom Strahlteiler 10 reflektiert und über ein Linsenarray 11 auf Beleuchtungsstellen 12.1, 12.2, 12.3 fokussiert werden. Sämtliche Beleuchtungsstellen 12.1, 12.2, 12.3 treffen auf eine ebene Grenzfläche 6. Die von dort reflektierten Lichtstrahlen 7.1, 7.2, 7.3 werden durch das Linsenarray 11 und den Strahlteiler 10 auf Fotodetektoren 13.1, 13.2, 13.3 abgebildet. Falls nur ein Bereich der Grenzfläche 6 eben ist, wird nur der dort auftreffende Lichtstrahl 7.1 oder 7.2 oder 7.3 zum zugeordneten Fotodetektor 13.1 oder 13.2 oder 13.3 reflektiert. Infolgedessen ist am Anstieg des Messsignals zumindest eines Fotodetektors 13.1, 13.2, 13.3 erkennbar, dass sich die Grenzfläche 6 in einer Beleuchtungsstelle 12.1, 12.2, 12.3 befindet.

Die Ausführung von Fig. 13 unterscheidet sich von der vorbeschriebenen dadurch, dass sich sämtliche Fotodetektoren 13.1, 13.2, 13.3 auf Lichtstrahlen 7.1, 7.2, 7.3 befinden, die parallel von einer Grenzfläche 6 reflektiert werden. Da die Lichtquelle 9 divergierende Lichtstrahlen 7.1, 7.2, 7.3 abgibt, werden sie nur von einer Grenzfläche 6 mit einem planen Zentralbereich 6.1 und zwei entgegengesetzt geneigten Randbereichen 6.2, 6.3 auf die zugeordneten Fotodetektoren 13.1, 13.2, 13.3 reflektiert. Die Form der Grenzfläche 6 entspricht etwa der Form eines konkaven Meniskus, der vielfach von der Oberfläche einer Flüssigkeit in einem Gefäß gebildet wird. Diese Anordnung ist deshalb besonders zur Detektion von Flüssigkeitsspiegeln in Gefäßen geeignet. Anhand des Anstieges der Summe der Messsignale der Fotodetektoren 13.1, 13.2, 13.3 ist die Anordnung der Beleuchtungsstellen 12.1, 12.2, 12.3 auf der Grenzfläche 6.1, 6.2, 6.3 besonders gut erkennbar.

Das optische Sensorsystem von Fig. 14 hat Lichtquellen 9.1, 9.2, 9.3, deren Lichtstrahlen 7.1, 7.2, 7.3 konvergieren, so dass sie nach Reflexion durch einen Strahlteiler 10 und Bündelung durch ein Linsenarray 11 in einer gemeinsamen Beleuchtungsstelle 12 zusammentreffen. Fotodetektoren 13.1, 13.2, 13.3 sind auf den Lichtstrahlen 7.1, 7.2, 7.3 angeordnet, die von einer planen Grenzfläche 6, die senkrecht zur Achse des Linsenarrays 11 ausgerichtet ist, reflektiert werden. Die Anordnung einer optimalen Reflexionsstelle in der Beleuchtungsstelle zeigt sich an dem Anstieg der Messsignale sämtlicher Fotodetektoren 13.1, 13.2, 13.3. Falls nur einer der einfallenden Lichtstrahlen 7.1 oder 7.2 oder 7.3 auf einen Fotodetektor 13.1 oder 13.2 oder 13.3 reflektiert wird, zeigt sich dies in einem Anstieg des Messsignals des betreffenden Fotodetektors. Deshalb erleichtert auch dieses optische Sensorsystem das Auffinden einer optimalen Reflexionsstelle.

Treffen die Beleuchtungsstellen 12.1, 12.2, 12.3 der vorbeschriebenen optischen Sensorsysteme nicht auf eine optimale Reflexionsstelle 8 einer Grenzfläche 6, so kann durch Verlagern der optischen Sensorsysteme bezüglich der Grenzfläche 6 erreicht werden, dass eine Beleuchtungsstelle auf eine optimale Reflexionsstelle 8 trifft und damit die Lage der Grenzfläche 6 feststellbar ist.

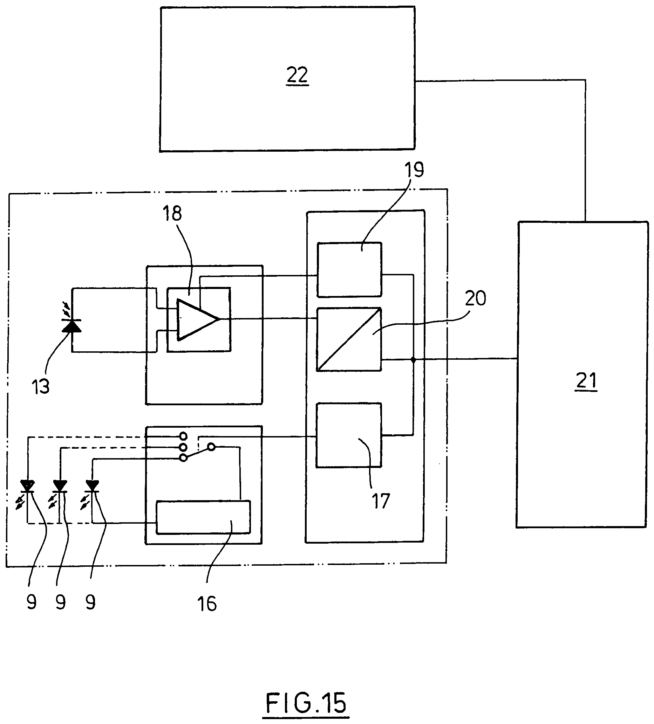

Gemäß Fig. 15 hat ein optisches Sensorsystem eine Spannungsversorgung 16 für mehrere Lichtquellen 9, die verschiedene Wellenlängen haben. Gesteuert werden die Lichtquellen 9 von einer Lichtsteuereinrichtung 17. Mittels der Lichtsteuereinrichtung 17 ist gezielt eine der verschiedenen Lichtquellen 9 einschaltbar, wobei die beste Wellenlänge für die Detektion einer bestimmten Grenzfläche gewählt werden kann.

Das Messsignal eines Fotodetektors 13 wird über einen Verstärker 18 mit einer Verstärkungsregelung 19 einem Rauschfilter 20 zugeführt. Das gefilterte Messsignal wird nach Digitalisierung mittels eines nicht gezeigten A/D-Wandlers einer Auswerte- und Steuerungseinrichtung in Form einer Recheneinheit 21 zugeführt, der die Messsignale auswertet. In Abhängigkeit von den Messsignalen steuert die Recheneinheit 21 eine Verstelleinrichtung 22 zum Verstellen des optischen Sensorsystems bezüglich einer Grenzfläche in Horizontal(X-Y-) und Vertikal(Z-)Richtung.

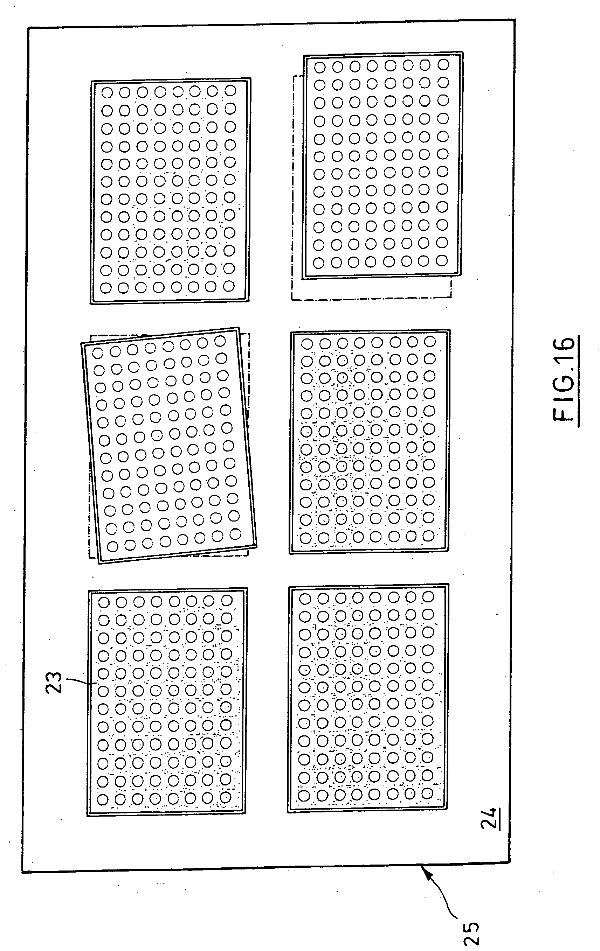

Gemäß Fig. 16 kann ein erfindungsgemäßes optisches Sensorssystem die Lage von Mikroplatten 23 im Arbeitsbereich 24 einer Vorrichtung zur Behandlung von Flüssigkeiten 25 feststellen. Eine Verschwenkung, eine Parallelverschiebung oder eine anderweitige Fehlanordnung einer Mikroplatte 23 gegenüber einer zugedachten Position wird mit Hilfe des optischen Sensorsystems erkannt. Sie kann bei der Bearbeitung von Flüssigkeiten in den Aufnahmen der Mikroplatten 23 und/oder bei einem Transport der Mikroplatten 23 berücksichtigt bzw. korrigiert werden.

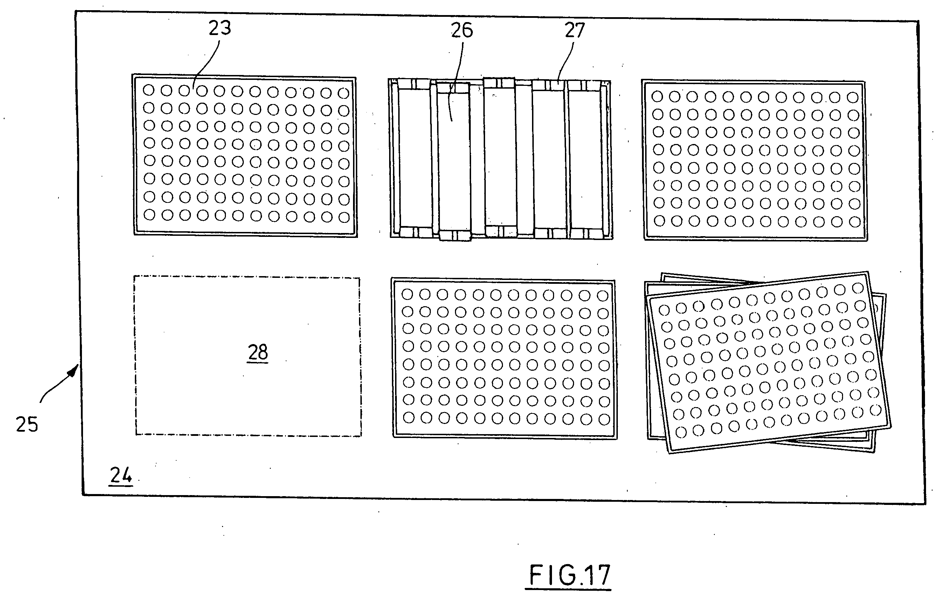

Gemäß Fig. 17 wird mit Hilfe eines optischen Sensorsystems die Lage von Mikroplatten 23 und Vorlagegefäßen 26 in einem Gestell 27 und das Fehlen einer Mikroplatte an einer dieser zugedachten Position 28 festgestellt. Der ermittelte Zustand der Laborwaren im Arbeitsbereich 24 der Vorrichtung zur Behandlung von Flüssigkeiten 25 wird bei den weiteren Behandlungsschritten berücksichtigt.

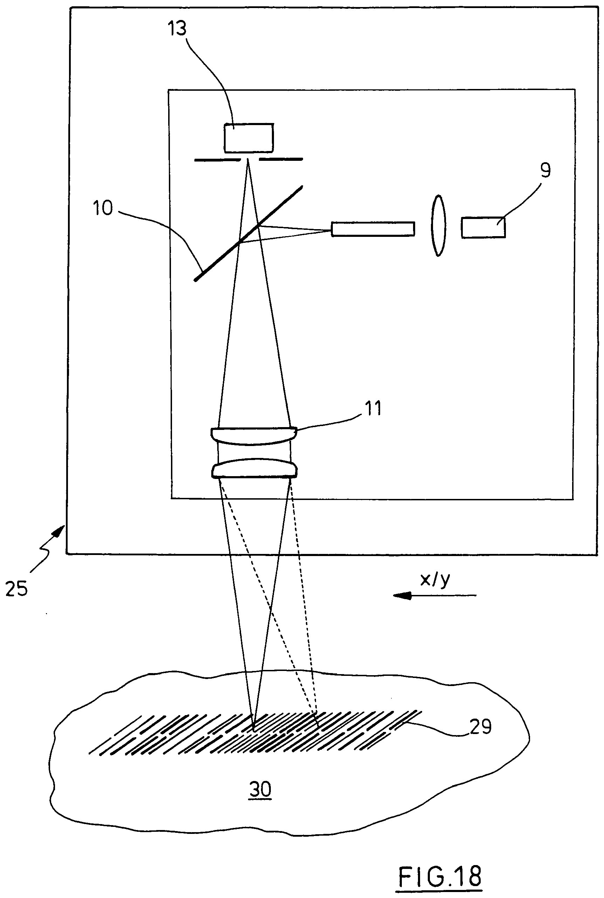

Fig. 18 zeigt ein optisches Sensorsystem, bei dem zum Abtasten eines Barcodes nur eine Lichtquelle 9 und nur ein Fotodetektor 13 eingeschaltet ist, so dass die Messanordnung dem Ausführungsbeispiel gemäß EP 1 288 635 A2 entspricht. Die diesbezüglichen Ausführungen in der vorgenannten Offenlegungsschrift werden durch Bezugnahme in die vorliegende Anmeldung einbezogen. Mittels der Messanordnung wird ein Barcode 29 auf einem Gegenstand 30 abgetastet, um diesen zu identifizieren. Zur Überprüfung der Abtastung kann durch Aktivierung einer - nicht gezeigten - zweiten Lichtquelle 9 und eines - nicht gezeigten - zweiten Fotodetektors eine gleichzeitige Messung vorgenommen werden. Hierfür wird das optische Sensorsystem in Horizontalrichtung bezüglich des Barcodes 29 verfahren.

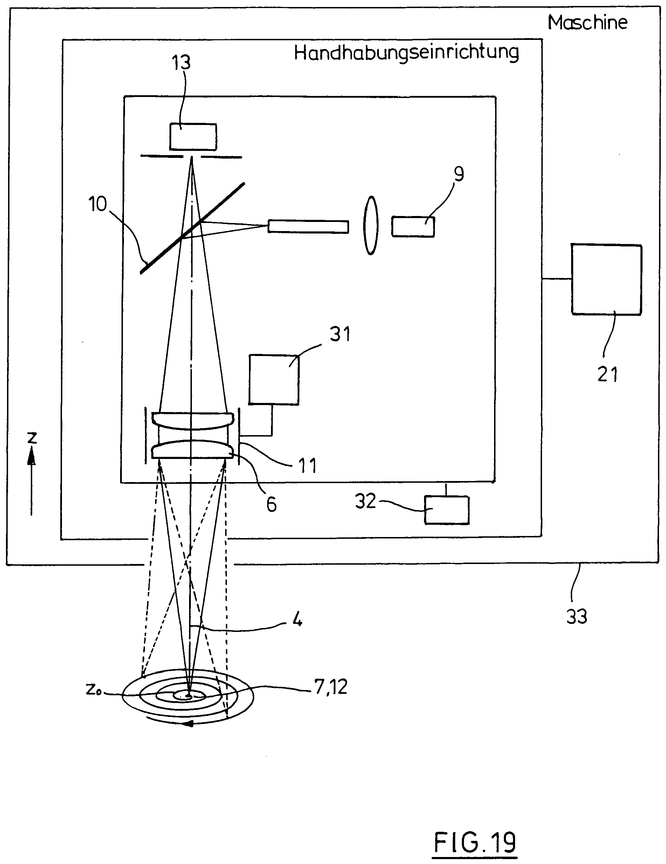

Das optische Sensorsystem gemäß Fig. 19 entspricht grundsätzlich dem optischen Sensorsystem von Fig. 18. Die Projektions- und Abbildungseinrichtung 11 ist mit einer Verstelleinrichtung 31 ausgestattet, die ein Verstellen der Achse der Projektion des Lichtstrahles auf den Beleuchtungspunkt und der Abbildung des Beleuchtungspunktes auf den Detektor 10 quer zur optischen Achse des Systems ermöglicht. Ferner ist eine zusätzliche Verstelleinrichtung 32 zum Verstellen des optischen Sensorsystems in Richtung der optischen Achse 4 vorhanden, um eine Abtastung auch in Richtung senkrecht zur Grenzfläche vorzunehmen. Eine Auswerte- und Steuerungseinrichtung wertet die Signale des Detektors 10 aus und steuert die Verstelleinrichtung 11 so, dass die punktförmige Beleuchtungsstelle 12 eine spiralförmige Bahn durchläuft, um eine Grenzfläche abzutasten. Das optische Sensorsystem ist in eine automatische Vorrichtung zur Behandlung von Flüssigkeiten 33 integriert.

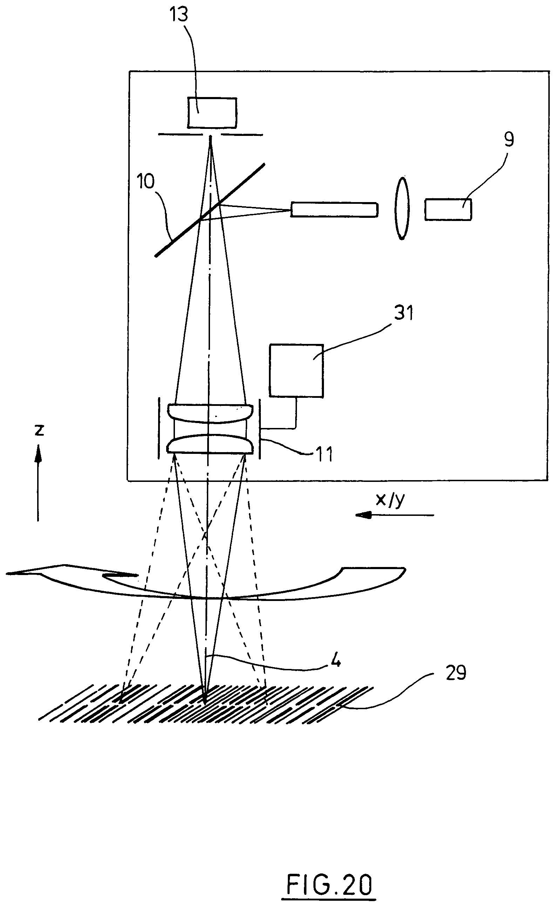

Gemäß Fig. 20 wird das optische Sensorsystem von Fig. 19 zum Abtasten eines in einer horizontalen Fläche eines Objektes (z.B. einer Mikrotiterplatte) Barcodes vorgenommen. Hierzu kann die Beleuchtungsstelle mittels der Verstelleinrichtung 31 in Richtung quer zur optischen Achse 4 verlagert werden.

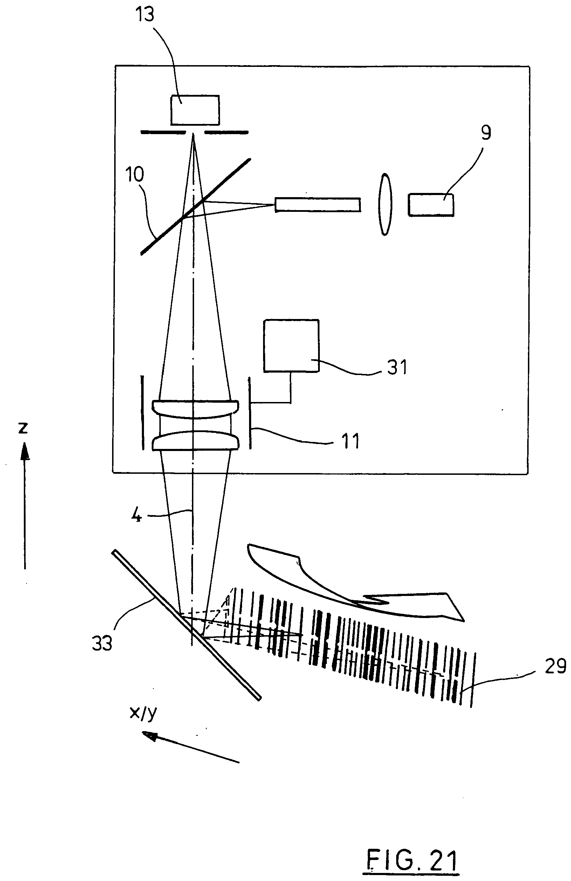

Schließlich zeigt Fig. 21 eine Anwendung, bei der ein Barcode 29 an einer senkrechten Ebene eines Objektes (z.B. einer Mikroplatte) abgetastet wird. Hierfür ist ein Spiegel 33 vorhanden, über den der Lichtstrahl auf den Barcode 29 reflektiert wird. Die Wanderung des Lichtstrahles entlang des Barcodes 29 wird durch Verstellen der Projektions- und Abbildungseinrichtung 11 mittels der Verstelleinrichtung 31 gesteuert.

## Patentansprüche

1. Optisches Sensorsystem zur Bestimmung der Höhe eines Flüssigkeitsspiegels in einem Gefäß in einer Vorrichtung zur Behandlung von Flüssigkeiten mit
- mindestens einer Einrichtung zum Projizieren (9, 10) eines fokussierten Lichtstrahls in Richtung einer optischen Achse (4) auf mindestens eine Beleuchtungsstelle (12) im Gefäß,
- einer Verstelleinrichtung (11) zum Verstellen der relativen Lage der mindestens einen Beleuchtungsstelle und des Flüssigkeitsspiegels in einer Richtung quer zu der optischen Achse,
- einer Verstelleinrichtung (32) zum Verstellen der relativen Lage der mindestens einen Beleuchtungsstelle und des Flüssigkeitsspiegels in Richtung der optischen Achse,
- einer Steuerungseinrichtung (21) zum Steuern der Verstelleinrichtungen, so dass diese die relative Lage der mindestens einen Beleuchtungsstelle und des Flüssigkeitsspiegels quer zu der optischen Achse und in Richtung der optischen Achse verstellen, wobei
- mindestens eine Einrichtung zum Abbilden der mindestens einen Beleuchtungsstelle beim Verstellen der relativen Lage auf mindestens einen Fotodetektor (13) und
- eine mit dem mindestens einen Fotodetektor (13) verbundene Auswerteeinrichtung (21) zum Auswerten des mindestens einen Messsignals vorgesehen sind,
**dadurch gekennzeichnet, dass**
- die Verstelleinrichtung zur gleichzeitigen Verstellung der relativen Lagen der mindestens einen Beleuchtungsstelle und des Flüssigkeitsspiegels in einer Richtung quer zur optischen Achse und in Richtung der optischen Achse ausgebildet ist und
- zwecks Ermittlung des optimalen Reflexionspunkts die Steuerungseinrichtung (21) eine Steuerungseinrichtung zum Steuern der Verlagerung der mindestens einen Beleuchtungsstelle quer zu der optischen Achse entlang einer spiralförmigen und/oder zykloidischen und/oder kreisförmigen und/oder zickzackförmigen Bahn ist.

2. Optisches Sensorsystem nach Anspruch 1, bei dem die Verstelleinrichtung (31) zum Verstellen der relativen Lage der mindestens einen Beleuchtungsstelle und des Flüssigkeitsspiegels quer zu der optischen Achse eine Einrichtung zum Schwenken einer Projektionsachse der Einrichtung zum Projizieren bezüglich der optischen Achse und/oder eine Einrichtung zum Parallelversetzen der Projektionsachse der Einrichtung zum Projizieren bezüglich der optischen Achse ist.

3. Optisches Sensorsystem nach einem der Ansprüche 1 bis 2, bei dem die Steuerungseinrichtung (21) eine Steuerungseinrichtung zum Steuern der Verlagerung der mindestens einen Beleuchtungsstelle quer zur optischen Achse innerhalb eines begrenzten Bereiches um die optische Achse ist.

4. Optisches Sensorsystem nach einem der Ansprüche 1 bis 3, bei dem die Steuerungseinrichtung (21) eine Steuerungseinrichtung zum Steuern der Verlagerung der mindestens einen Beleuchtungsstelle quer zu der optischen Achse mit der optischen Achse etwa im Zentrum der Verlagerung ist.

5. Optisches Sensorsystem nach einem der Ansprüche 1 bis 4, bei dem die Steuerungseinrichtung (21) eine Steuerungseinrichtung zum Steuern der Verlagerung der mindestens einen Beleuchtungsstelle von der optischen Achse weg bis zum Erreichen eines maximalen Abstandes von der optischen Achse und/oder der Verlagerung der mindestens einen Beleuchtungsstelle von einem maximalen Abstand von der optischen Achse aus zur Referenzachse hin ist.

6. Optisches Sensorsystem nach Anspruch 5, bei dem die Steuerungseinrichtung (21) eine Steuerungseinrichtung zum Steuern der Verlagerung der mindestens einen Beleuchtungsstelle wiederholt von der optischen Achse weg bis zum Erreichen eines maximalen Abstandes von der optischen Achse und von dem maximalen Abstand aus zur optischen Achse hin ist.

7. Optisches Sensorsystem nach einem der Ansprüche 1 bis 6, bei dem die Auswerteeinrichtung (21) eine Auswerteeinrichtung zum Ermitteln des maximalen Messsignals beim Verlagern der mindestens einen Beleuchtungsstelle quer zu der optischen Achse und/oder in Richtung der optischen Achse ist.

8. Optisches Sensorsystem nach einem der Ansprüche 1 bis 7, bei dem die Steuerungseinrichtung (21) nach Ermittlung eines maximalen Messsignales durch die Auswerteeinrichtung die Verlagerung der mindestens einen Beleuchtungsstelle etwa auf die Position oder in einem bestimmten Abstand von der Position in Richtung der optischen Achse steuert, in der das maximale Messsignal ermittelt wurde, und erneut die Verlagerung der mindestens einen Beleuchtungsstelle quer zu der optischen Achse und/oder in Richtung der optischen Achse steuert, wobei die erneute Verlagerung um eine kürzere Strecke und/oder mit einer geringeren Geschwindigkeit als die vorangegangene Verlagerung erfolgt.

9. Optisches Sensorsystem nach einem der Ansprüche 1 bis 8, bei der die Einrichtung zum Projizieren (9, 10, 11) eine Einrichtung zum gleichzeitigen Projizieren von Lichtstrahlen auf mehrere Beleuchtungsstellen ist und/oder die Einrichtung zum Projizieren (9, 10, 11) eine Einrichtung zum gleichzeitigen Projizieren von Lichtstrahlen unter verschiedenen Winkeln auf dieselbe Beleuchtungsstelle (12) ist und/oder mehrere Fotodetektoren (13) vorhanden sind.

10. Optisches Sensorsystem nach einem der Ansprüche 1 bis 9, bei dem die Einrichtung zum Projizieren (9, 10, 11) mindestens eine Lichtquelle (9) aufweist und
die mindestens eine Lichtquelle (9) Licht mit einer Wellenlänge abgibt, das in besonders starkem Maße von einer zu detektierenden Grenzfläche (6) reflektiert wird.

11. Optisches Sensorsystem nach einem der Ansprüche 1 bis 10, bei dem die Einrichtung zum Projizieren (9, 10, 11) mehrere gesondert schaltbare Lichtquellen (9) mit verschiedener Wellenlänge aufweist und/oder eine Lichtquelle (9) mit einstellbarer Wellenlänge aufweist.

12. Optisches Sensorsystem nach einem der Ansprüche 9 bis 11, bei dem die Beleuchtungsstellen (12) eine dreidimensionale Anordnung oder eine Anordnung in einer Fläche haben.

13. Optisches Sensorsystem nach einem der Ansprüche 1 bis 12 an einer Einrichtung zum Verlagern eines Dosierwerkzeuges und/oder an einer Transportvorrichtung zum Verlagern von Laborgegenständen der Vorrichtung zur Behandlung von Flüssigkeiten (33).

14. Optisches Sensorsystem nach einem der Ansprüche 1 bis 13 an einer automatischen Vorrichtung zur Behandlung von Flüssigkeiten (33).

15. Verfahren zur Bestimmung der Höhe eines Flüssigkeitsspiegels in Laborgefäßen, bei dem
- ein fokussierter Lichtstrahl in Richtung einer optischen Achse auf mindestens eine Beleuchtungsstelle im Gefäß projiziert wird,
- die relative Lage der mindestens einen Beleuchtungsstelle und des Flüssigkeitsspiegels in einer Richtung quer zu der optischen Achse und in Richtung der optischen Achse verändert wird,
- die mindestens eine Beleuchtungsstelle auf mindestens einen Fotodetektor abgebildet wird und
- das Messsignal des Fotodetektors ausgewertet wird,
- **dadurch gekennzeichnet, dass**
- die relative Lage der mindestens einen Beleuchtungsstelle und des Flüssigkeitsspiegels in Richtung quer zur optischen Achse und gleichzeitig in Richtung der optischen Achse verändert wird,
- und wobei zur Bestimmung des optimalen Reflexionspunkts die mindestens eine Beleuchtungsstelle spiralförmig und/oder zykloidisch und/oder zickzackförmig quer zu der optischen Achse verlagert wird.

16. Verfahren nach Anspruch 15, bei dem die Achse der Projektion des Lichtes auf die mindestens eine Beleuchtungsstelle bezüglich der Referenzachse geschwenkt und/oder bezüglich der optischen Achse parallel versetzt wird.

17. Verfahren nach einem der Ansprüche 15 oder 16, bei dem die mindestens eine Beleuchtungsstelle innerhalb vorgegebener Grenzen um die optische Achse verlagert wird.

18. Verfahren nach einem der Ansprüche 15 bis 17, bei dem die mindestens eine Beleuchtungsstelle immer weiter von der optischen Achse weg bis zum Erreichen eines maximalen Abstandes von der optischen Achse verlagert wird und/oder bei dem die mindestens eine Beleuchtungsstelle von einem maximalen Abstand von der optischen Achse aus immer näher zur optischen Achse hin bewegt wird.

19. Verfahren nach Anspruch 18, bei dem die mindestens eine Beleuchtungsstelle wiederholt von der optischen Achse weg bis zum Erreichen eines maximalen Abstandes von der optischen Achse und von dem maximalen Abstand aus zur optischen Achse hin verlagert wird.

20. Verfahren nach einem der Ansprüche 15 bis 19, bei dem das maximale Messsignal beim Verlagern der mindestens einen Beleuchtungsstelle quer zu der optischen Achse und/oder entlang der optischen Achse ermittelt wird.

21. Verfahren nach einem der Ansprüche 15 bis 20, bei dem nach Ermittlung eines maximalen Messsignales die mindestens eine Beleuchtungsstelle etwa auf die oder in einem geringen Abstand von der Position entlang der optischen Achse eingestellt wird, in der das maximale Messsignal ermittelt wurde, und erneut das maximale Messsignal mindestens eines Fotodetektors beim Verlagern der mindestens einen Beleuchtungsstelle quer zur optischen Achse und/oder entlang der optischen Achse ermittelt wird, wobei die mindestens eine Beleuchtungsstelle um eine kürzere Strecke und/oder mit einer geringeren Geschwindigkeit als bei der vorangegangenen Verlagerung verlagert wird.

22. Verfahren nach einem der Ansprüche 15 bis 21, bei dem Lage der Beleuchtungsstelle beim Maximum des Messsignals als Lage der Grenzfläche und/oder als Lage des optimalen Reflexionspunktes auf dem Flüssigkeitsspiegel bestimmt wird.

23. Verfahren nach einem der Ansprüche 15 bis 22, bei dem gleichzeitig Lichtstrahlen auf mehrere Beleuchtungsstellen projiziert wird und/oder Lichtstrahlen unter verschiedenen Winkeln auf dieselbe Beleuchtungsstelle projiziert wird und/oder die mindestens eine Beleuchtungsstelle auf mehrere Fotodetektoren abgebildet wird.

24. Verfahren nach Anspruch 23, bei dem die Lage der mindestens einen Beleuchtungsstelle in Querrichtung zur Vertikalen verändert wird, falls beim Verändern des vertikalen Abstandes zwischen Beleuchtungsstelle und Flüssigkeitsspiegel kein Maximum des Messsignals mindestens eines Fotodetektors ermittelt wird und danach erneut unter Veränderung des vertikalen Abstands der mindestens einen Beleuchtungsstelle und der Grenzfläche nach einem Maximum des Messsignals gesucht wird.

25. Verfahren nach einem der Ansprüche 15 bis 24, bei dem
- ein Lichtstrahl in Richtung eines Flüssigkeitsspiegels auf mindestens eine Beleuchtungsstelle projiziert wird,
- die Verteilung der reflektieren Lichtmenge mittels mehrerer Fotodetektoren ermittelt wird und
- aufgrund der ermittelten Lichtmengenverteilung die wahrscheinliche Lage der optimalen Reflexionsstelle auf dem Flüssigkeitsspiegel und/oder die wahrscheinliche Lage und/oder die Identität des Flüssigkeitsspiegels ermittelt wird.

26. Verfahren nach Anspruch 25, bei dem die mindestens eine Beleuchtungsstelle auf die wahrscheinliche Lage der optimalen Reflexionsstelle und/oder die wahrscheinliche Lage des Flüssigkeitsspiegels eingestellt und die Messung wiederholt wird.

27. Verfahren nach einem der Ansprüche 15 bis 26, bei dem
- Licht auf mehrere Beleuchtungsstellen projiziert wird,
- die Beleuchtungsstellen über einen Flüssigkeitsspiegel verfahren werden,
- jede Beleuchtungsstelle auf einen dieser zugeordneten Fotodetektor abgebildet wird und
- die von den mehreren Fotodetektoren gelieferten Messsignale verglichen und im Falle einer Abweichung ein Messfehler festgestellt wird.

## Claims

1. An optical sensor system for determining the height of the liquid level in a receptacle in a device for the treatment of liquids with
- at least one device for the projecting (9, 10, 11) of light in the direction of an optical axis (4) onto at least one illumination area (12) in the receptacle,
- an adjustment device (11) for adjusting the relative position of the at least one illumination area and a liquid level in a direction diagonal to the optical axis,
- an adjustment device (32) for adjusting the relative position of the at least one illumination area and the liquid level in the direction of the optical axis,
- a control device (21) for controlling the adjustment devices so that they simultaneously adjust the relative position of the at least one illumination area and the boundary surface diagonal to the optical axis and in the direction of the optical axis, wherein
- at least one apparatus for the imaging (11) of the at least one illumination area during the adjustment of the relative position of at least one photodetector (13) and
- an evaluation device (21) connected with the at least one photodetector (13) for evaluating the at least one measurement signal are provided, **characterised in that**
- the adjustment device (11) is designed to simultaneously adjust the relative positions of the at least one illumination area and the liquid level in the direction diagonal to the optical axis and in the direction of the optical axis, and
- for determining the optimal reflection point the control device (21) is a control device for controlling the displacement of the at least one illumination area diagonal to the optical axis along a spiral and/or cycloid and/or circular and/or zigzag path.

2. The optical sensor system according to claim 1, in which the adjustment device (31) for adjusting the relative position of the least one illumination area and the boundary surface diagonal to the optical axis is a device for pivoting a projection axis of the projecting device with respect to the optical axis and/or a device for the parallel displacement of the projection axis of the projecting device with respect to the optical axis.

3. The optical sensor system according to one of claims 1 to 2, in which the control device (21) is a control device for controlling the displacement of the at least one illumination area diagonal to the optical axis within a restricted area around the optical axis.

4. The optical sensor system according to one of claims 1 to 3, in which the control device (21) is a control device for controlling the displacement of the at least one illumination area diagonal to the optical axis with the optical axis approximately in the center of the displacement.

5. The optical sensor system according to one of claims 1 to 4, in which the control device (21) is a control device for controlling the displacement of the at least one illumination area from the optical axis up to the reaching of a maximum distance from the optical axis and/or the displacement of the at least one illumination area from a maximum distance from the optical axis to the reference axis.

6. The optical sensor system according to claim 5, in which the control device (21) is a control device for controlling the displacement of the at least one illumination area repeatedly from the optical axis up until the reaching of a maximum distance from the optical axis and from the maximum distance to the optical axis.

7. The optical sensor system according to one of claims 1 to 6, in which the evaluation device (21) is an evaluation device for determining the maximum measurement signal during displacement of the at least one illumination area diagonal to the optical axis and/or in the direction of the optical axis.

8. The optical sensor system according to one of claims 1 to 7, in which the control device (21) after determining a maximum measurement signal by the evaluation unit controls the displacement of the at least one illumination area approximately to the position or to a certain distance from the position in the direction of the optical axis, in which the maximum measurement signal was determined, and again controls the displacement of the at least one illumination area diagonal to the optical axis and/or in the direction of the optical axis, wherein the new displacement takes places around a shorter path and/or at a lower speed than the previous displacement.

9. The optical sensor system according to one of claims 1 to 8, in which the projecting device (9, 10, 11) is a device for the simultaneous projecting of light onto several illumination areas and/or the projecting device (9, 10, 11) is a device for the simultaneous projecting of light under different angles onto the same illumination area (12) and/or several photodetectors (13) are present.

10. The optical sensor system according to one of claims 1 to 9, in which the projecting device (9, 10, 11) has at least one light source (9), and in which the at least one light source (9) emits light with a wavelength, which is reflected to a particularly strong degree by a boundary surface (6) to be detected.

11. The optical sensor system according to one of claims 1 to 10, in which the projecting device (9, 10, 11) has several separately switchable light sources (9) with different wavelengths and/or has a light source (9) with an adjustable wavelength.

12. The optical sensor system according to one of claims 9 to 11, in which the illumination areas (12) have a three-dimensional arrangement or an arrangement in a surface.

13. The optical sensor system according to one of claims 1 to 12 on a device for the displacement of a dosing tool and/or on a transport apparatus for the displacement of lab objects of the device for the treatment of liquids (33).

14. The optical sensor system according to one of claims 1 to 13 on an automated device for the treatment of liquids (33).

15. A method for determining the liquid level in lab receptacles, in which
- a focused light beam is projected in the direction of an optical axis onto at least one illumination area in the receptacle,
- the relative position of the at least one illumination area and the liquid level is changed in a direction diagonal to the optical axis and simultaneously in the direction of the optical axis,
- the at least one illumination area is imaged onto at least one photodetector and
- the measurement signal of the photodetector is evaluated,
**characterised in that**
- the relative position of the at least one illumination area and the liquid level in the direction diagonal to the optical axis and in the direction of the optical axis are simultaneously adjusted, and
- for determining the optimal reflection point the at least one illumination area is displaced diagonal to the optical axis in a spiral and/or cycloid and/or zigzag manner.

16. The method according to claim 15, in which the axis of the projection of the light onto at least one illumination area is pivoted with respect to the reference axis and/or is displaced parallel with respect to the optical axis.

17. The method according to one of claims 15 to 16, in which the at least one illumination area is displaced within specified limits around the optical axis.

18. The method according to one of claims 15 to 17, in which the at least one illumination area is displaced further and further from the optical axis up to a maximum distance from the optical axis and/or the least one illumination area is moved from a maximum distance from the optical axis closer and closer to the optical axis.

19. The method according to claim 18, in which the at least one illumination area is displaced repeatedly from the optical axis up to a maximum distance from the optical axis and from the maximum distance to the optical axis is reached.

20. The method according to one of claims 15 to 19, in which the maximum measurement signal is determined during the displacement of the at least one illumination area diagonal to the optical axis and/or along the optical axis.

21. The method according to one of claims 15 to 20, in which after determination of a maximum measurement signal the at least one illumination area is approximately set to the or at a close distance from the position along the optical axis, in which the maximum measurement signal is determined, and the maximum measurement signal of at least one photodetector is determined again during the displacement of the at least one illumination area diagonal to the optical axis and/or along the optical axis, wherein the at least one illumination area is displaced by a short path and/or with a slower speed than in the case of the previous displacement.

22. The method according to one of claims 15 through 21, in which the position of the illumination area is determined at the maximum of the measurement signal as the position of the boundary surface and/or as the position of the optimal reflection point on the boundary surface.

23. The method according to one of claims 15 through 22, in which light is simultaneously projected onto several illumination areas and/or light is projected under different angles onto the same illumination area and/or the at least one illumination area is imaged onto several photodetectors.

24. The method according to claim 23, in which the position of the at least one illumination area is changed in the diagonal direction with respect to the vertical if no maximum of the measurement signal of at least one photodetector is determined during the changing of the vertical distance between the illumination area and the boundary surface and then a maximum of the measurement signal is again sought while changing the vertical distance of the at least one illumination area and the boundary surface.

25. The method according to one of claims 15 through 24, in which
- light is projected in the direction of a liquid level onto at least one illumination area,
- the distribution of the reflected light quantity is determined by means of several photodetectors and
- the probable position of the optimal reflection point on the liquid level and/or the probable position and/or the probable identity of the boundary surface is determined based on the determined light quantity distribution.

26. The method according to claim 25, in which the at least one illumination area is set to the probable position of the optimal reflection point and/or the probable position of the liquid level and the measurement is repeated.

27. The method according to one of claims 15 through 26, in which
- light is projected onto several illumination areas,
- the illumination areas move over the liquid level,
- each liquid level is imaged onto a photodetector assigned to it and
- the measurement signals provided by the several photodetectors are compared and a measurement error is determined in the case of a deviation.

## Revendications

1. Système de détecteur optique destiné à déterminer la hauteur d'un niveau de liquide dans un récipient dans un dispositif de traitement de liquide, comprenant :
- au moins un dispositif de projection (9, 10) d'un faisceau lumineux focalisé dans la direction d'un axe optique (4) sur au moins un point d'éclairage (12) dans le récipient,
- un dispositif de réglage (11) pour le réglage de la position relative de l'au moins un point d'éclairage et du niveau de liquide dans une direction transversale à l'axe optique,
- un dispositif de réglage (32) pour le réglage de la position relative de l'au moins un point d'éclairage et du niveau de liquide dans la direction de l'axe optique,
- un dispositif de commande (21) pour la commande des dispositifs de réglage, de manière à ce que ceux-ci règlent la position relative de l'au moins un point d'éclairage et du niveau de liquide transversalement à l'axe optique et dans la direction de l'axe optique, dans lequel
- il est prévu au moins un dispositif de reproduction de l'au moins un point d'éclairage lors du réglage de la position relative sur au moins un photodétecteur (13) et
- un dispositif d'évaluation (21) relié à l'au moins un photodétecteur (13) pour évaluer l'au moins un signal de mesure,
**caractérisé en ce que**
- le dispositif de réglage est configuré pour régler simultanément les positions relatives de l'au moins un point d'éclairage et du niveau de liquide dans une direction transversale à l'axe optique et dans la direction de l'axe optique, et
- pour déterminer le point de réflexion optimal, le dispositif de commande (21) est un dispositif de commande permettant de commander le déplacement de l'au moins un point d'éclairage transversalement à l'axe optique le long d'une voie en forme de spirale et/ou cycloïdale et/ou circulaire et/ou en zigzags.

2. Système de détecteur optique selon la revendication 1, dans lequel le dispositif de réglage (31) destiné à régler la position relative de l'au moins un point d'éclairage et du niveau de liquide transversalement à l'axe optique est un dispositif permettant de faire pivoter un axe de projection du dispositif de projection par rapport à l'axe optique et/ou un dispositif permettant d'effectuer un décalage parallèle de l'axe de projection du dispositif de projection par rapport à l'axe optique.

3. Système de détecteur optique selon l'une des revendications 1 à 2, dans lequel le dispositif de commande (21) est un dispositif de commande permettant de commander le déplacement de l'au moins un point d'éclairage transversalement à l'axe optique dans une zone limitée autour de l'axe optique.

4. Système de détecteur optique selon l'une des revendications 1 à 3, dans lequel le dispositif de commande (21) est un dispositif de commande permettant de commander le déplacement de l'au moins un point d'éclairage transversalement à l'axe optique, avec l'axe optique approximativement au centre du déplacement.

5. Système de détecteur optique selon l'une des revendications 1 à 4, dans lequel le dispositif de commande (21) est un dispositif de commande permettant de commander le déplacement de l'au moins un point d'éclairage à distance de l'axe optique jusqu'à un écart maximal par rapport à l'axe optique et/ou le déplacement de l'au moins un point d'éclairage à partir d'un écart maximal par rapport à l'axe optique vers l'axe de référence.

6. Système de détecteur optique selon la revendication 5, dans lequel le dispositif de commande (21) est un dispositif de commande permettant de commander le déplacement de l'au moins un point d'éclairage de façon répétée à distance de l'axe optique jusqu'à un écart maximal par rapport à l'axe optique et de l'écart maximal vers l'axe optique.

7. Système de détecteur optique selon l'une des revendications 1 à 6, dans lequel le dispositif d'évaluation (21) est un dispositif d'évaluation permettant de déterminer le signal de mesure maximal lors du déplacement de l'au moins un point d'éclairage transversalement à l'axe optique et/ou dans la direction de l'axe optique.

8. Système de détecteur optique selon l'une des revendications 1 à 7, dans lequel le dispositif de commande (21), après la détermination d'un signal de mesure maximal par le dispositif d'évaluation, commande le déplacement de l'au moins un point d'éclairage approximativement sur la position ou à une certaine distance de la position dans la direction de l'axe optique, à laquelle le signal de mesure maximal a été déterminé, et commande de nouveau le déplacement de l'au moins un point d'éclairage transversalement à l'axe optique et/ou dans la direction de l'axe optique, le nouveau déplacement étant réalisé sur un trajet plus court et/ou avec une vitesse réduite par rapport au déplacement précédent.

9. Système de détecteur optique selon l'une des revendications 1 à 8, dans lequel le dispositif de projection (9, 10, 11) est un dispositif permettant de projeter simultanément des faisceaux lumineux sur plusieurs points d'éclairage et/ou le dispositif de projection (9, 10, 11) est un dispositif permettant de projeter simultanément des faisceaux lumineux sous différents angles sur le même point d'éclairage (12) et/ou dans lequel il est prévu plusieurs photodétecteurs (13).

10. Système de détecteur optique selon l'une des revendications 1 à 9, dans lequel le dispositif de projection (9, 10, 11) présente au moins une source de lumière (9), et
- l'au moins une source de lumière (9) émet de la lumière avec une longueur d'onde, laquelle est réfléchie dans une très large mesure par une surface limite (6) à détecter.

11. Système de détecteur optique selon l'une des revendications 1 à 10, dans lequel le dispositif de projection (9, 10, 11) présente plusieurs sources de lumière (9) commutables séparément avec différentes longueurs d'onde et/ou présente une source de lumière (9) avec une longueur d'onde réglable.

12. Système de détecteur optique selon l'une des revendications 9 à 11, dans lequel les points d'éclairage (12) présentent un agencement tridimensionnel ou un agencement dans un plan.

13. Système de détecteur optique selon l'une des revendications 1 à 12 sur un dispositif de déplacement d'un outil de dosage et/ou sur un dispositif de transport destiné à déplacer du matériel de laboratoire du dispositif de traitement de liquides (33).

14. Système de détecteur optique selon l'une des revendications 1 à 13 sur un dispositif automatique de traitement de liquides (33).

15. Procédé destiné à déterminer la hauteur d'un niveau de liquide dans des récipients de laboratoire, dans lequel
- un faisceau lumineux focalisé est projeté dans la direction d'un axe optique sur au moins un point d'éclairage dans le récipient,
- la position relative de l'au moins un point d'éclairage et du niveau de liquide est modifiée dans une direction transversale à l'axe optique et dans la direction de l'axe optique,
- l'au moins un point d'éclairage est représenté sur au moins un photodétecteur, et
- le signal de mesure du photodétecteur est évalué,
**caractérisé en ce que**
- la position relative de l'au moins un point d'éclairage et du niveau de liquide est modifiée dans la direction transversale à l'axe optique et simultanément dans la direction de l'axe optique,
- et dans lequel, pour déterminer le point de réflexion optimal, l'au moins un point d'éclairage est déplacé en spirale et/ou de manière cycloïdale et/ou en zigzags transversalement à l'axe optique.

16. Procédé selon la revendication 15, dans lequel l'axe de projection de la lumière sur l'au moins un point d'éclairage est pivoté par rapport à l'axe de référence et/ou décalé parallèlement à l'axe optique.

17. Procédé selon l'une des revendications 15 ou 16, dans lequel l'au moins un point d'éclairage est déplacé dans des limites prédéfinies autour de l'axe optique.

18. Procédé selon l'une des revendications 15 à 17, dans lequel l'au moins un point d'éclairage est déplacé de plus en plus loin de l'axe optique jusqu'à un écart maximal par rapport à l'axe optique et/ou dans lequel l'au moins un point d'éclairage est déplacé à partir d'un écart maximal par rapport à l'axe optique de plus en plus près de l'axe optique.

19. Procédé selon la revendication 18, dans lequel l'au moins un point d'éclairage est déplacé de façon répétée à distance de l'axe optique jusqu'à un écart maximal par rapport à l'axe optique et de l'écart maximal vers l'axe optique.

20. Procédé selon l'une des revendications 15 à 19, dans lequel le signal de mesure maximal est déterminé lors du déplacement de l'au moins un point d'éclairage transversalement à l'axe optique et/ou le long de l'axe optique.

21. Procédé selon l'une des revendications 15 à 20, dans lequel, après la détermination d'un signal de mesure maximal, l'au moins un point d'éclairage est réglé approximativement sur la position ou à une petite distance de la position le long de l'axe optique, à laquelle le signal de mesure maximal a été déterminé, et le signal de mesure maximal d'au moins un photodétecteur est de nouveau déterminé lors du déplacement de l'au moins un point d'éclairage transversalement à l'axe optique et/ou le long de l'axe optique, l'au moins un point d'éclairage étant déplacé sur un trajet plus court et/ou avec une vitesse réduite par rapport au déplacement précédent.

22. Procédé selon l'une des revendications 15 à 21, dans lequel la position du point d'éclairage au maximum du signal de mesure est déterminée comme étant la position de la surface limite et/ou comme étant la position du point de réflexion optimal sur le niveau de liquide.

23. Procédé selon l'une des revendications 15 à 22, dans lequel des faisceaux lumineux sont projetés simultanément sur plusieurs points d'éclairage et/ou des faisceaux lumineux sont projetés sous différents angles sur le même point d'éclairage et/ou l'au moins un point d'éclairage est représenté sur plusieurs photodétecteurs.

24. Procédé selon la revendication 23, dans lequel la position de l'au moins un point d'éclairage est modifiée dans la direction transversale à la verticale, dans le cas où aucun maximum du signal de mesure d'au moins un photodétecteur n'est déterminé lors de la modification de l'écart vertical entre le point d'éclairage et le niveau de liquide, et un maximum du signal de mesure est ensuite recherché de nouveau en modifiant l'écart vertical de l'au moins un point d'éclairage et de la surface limite.

25. Procédé selon l'une des revendications 15 à 24, dans lequel
- un faisceau lumineux est projeté dans la direction d'un niveau de liquide sur au moins un point d'éclairage,
- la répartition de la quantité de lumière réfléchie est déterminée au moyen de plusieurs photodétecteurs, et
- la position probable du point de réflexion optimal sur le niveau de liquide et/ou la position probable et/ou l'identité du niveau de liquide sont déterminées sur la base de la répartition de la quantité de lumière déterminée.

26. Procédé selon la revendication 25, dans lequel l'au moins un point d'éclairage est réglé sur la position probable du point de réflexion optimal et/ou la position probable du niveau de liquide et la mesure est répétée.

27. Procédé selon l'une des revendications 15 à 26, dans lequel
- de la lumière est projetée sur plusieurs points d'éclairage,
- les points d'éclairage sont déplacés au-dessus d'un niveau de liquide,
- chaque point d'éclairage est représenté sur un photodétecteur attribué à celui-ci, et
- les signaux de mesure délivrés par les plusieurs photodétecteurs sont comparés et une erreur de mesure est constatée en cas de déviation.
